(19) Europäisches Patentamt
European Patent Office
Office européen des brevets

(11) EP 3 435 067 B1

(12) # FASCICULE DE BREVET EUROPEEN

(45) Date de publication et mention de la délivrance du brevet:
**16.07.2025 Bulletin 2025/29**

(21) Numéro de dépôt: **18184985.2**

(22) Date de dépôt: **23.07.2018**

(51) Classification Internationale des Brevets (IPC):
***G01N 17/00*** *(2006.01)*

(52) Classification Coopérative des Brevets (CPC):
**G01N 17/008; F28F 19/00; F28F 27/00;** F28D 9/00; F28F 3/00; F28G 15/003; G01K 7/16

(54) **SYSTÈME ET PROCÉDÉ D'ÉVALUATION D'AU MOINS UNE CONDITION DE FONCTIONNEMENT D'UN ÉCHANGEUR DE CHALEUR**

SYSTEM UND VERFAHREN ZUR ÜBERPRÜFUNG MINDESTENS EINER BETRIEBSBEDINGUNG EINES WÄRMETAUSCHERS

SYSTEM AND METHOD FOR EVALUATING AT LEAST ONE OPERATING CONDITION OF A HEAT EXCHANGER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2017 FR 1757017**

(43) Date de publication de la demande:
**30.01.2019 Bulletin 2019/05**

(73) Titulaire: **Commissariat à l'Energie Atomique et aux Energies Alternatives**
**75015 Paris (FR)**

(72) Inventeurs:
- **DUCROS, Frédéric**
**38120 FONTANIL (FR)**
- **MEMPONTEIL, Alain**
**38600 FONTAINE (FR)**
- **MINVIELLE, Zoé**
**38000 GRENOBLE (FR)**

(74) Mandataire: **Hautier IP**
**20, rue de la Liberté**
**06000 Nice (FR)**

(56) Documents cités:

| | |
|---|---|
| **WO-A1-2009/153323** | **FR-A1- 2 941 300** |
| **JP-A- 2010 091 181** | **US-A1- 2005 217 841** |

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

### DOMAINE TECHNIQUE DE L'INVENTION

L'invention concerne le domaine des dispositifs et procédés sièges de transferts thermiques où les parois peuvent, à certains moments, être l'objet de phénomènes d'encrassement ou de dégradation, par exemple par perte de matière liée à leur corrosion ou par oxydation. Sont concernés l'industrie chimique, le secteur de l'énergie, incluant le secteur pétrolier, le secteur de l'agro-alimentaire, le secteur des transports, l'industrie du froid, de la climatisation, etc.

L'invention concerne plus particulièrement un dispositif et un procédé d'évaluation des conditions de fonctionnement d'un échangeur de chaleur incluant tout type de technologies, tel qu'un condenseur, un évaporateur, un échangeur-réacteur, etc.

### ÉTAT DE LA TECHNIQUE

La simple mesure de quantités physiques en entrée et en sortie d'un échangeur thermique (mesures de pression et de température, mesure du débit) permet de remonter à la performance moyenne globale du transfert thermique dans l'échangeur thermique. Toutefois, cela ne permet pas d'avoir des indications sur la qualité du transfert thermique local et en particulier de détecter une perte d'efficacité locale, par exemple due à un encrassement local d'une paroi de transfert thermique.

Pour obtenir ce type d'indications locales, il faut mettre en œuvre des dispositifs de mesures locaux.

De nombreux dispositifs comprenant une sonde de température sont dédiés à la mesure directe ou indirecte des flux thermiques locaux et/ou de températures locales et, par là même, permettent de remonter au coefficient d'échange thermique local, et donc de donner des indications sur les conditions de fonctionnement locales des échangeurs thermiques. Trois dispositifs de ce type sont discutés ci-dessous.

Le document WO 01/94876 A1 propose notamment un dispositif et un procédé pour suivre l'encrassement d'une cuve de combustion d'un échangeur-réacteur à énergie fossile. Selon cette méthode, on évalue une valeur de résistance d'un réseau en matériau conducteur qui est par exemple constitué par les parois des tubes d'un échangeur. A cet effet, ce réseau est soumis à un ou plusieurs signaux électriques donnés. La valeur de résistance ainsi calculée est comparée à une valeur de résistance nominale déterminée sur le même réseau à un instant de référence antérieur. Si la valeur de résistance ainsi obtenue est supérieure à la valeur de résistance nominale, on considère qu'il y a encrassement. Cette solution a en particulier l'inconvénient de ne pouvoir être utilisée qu'avec une contribution des phénomènes de convection thermique (fonctionnement du réacteur à un débit en énergie fossile et à une température de la cuve donnés) qui est celle avec laquelle la mesure de la valeur de résistance nominale a été mesurée.

Le document WO 2007/099240 A1 divulgue un échangeur thermique à plaques empilées incluant un dispositif d'évaluation de son état d'encrassement. Ce dispositif d'évaluation comporte une résistance électrique, qui est thermiquement reliée à la plaque située à l'extrémité de l'empilement et qui est destinée à être parcourue par un courant électrique paramétré pour amplifier le flux de chaleur véhiculé au sein de l'échangeur. Le dispositif d'évaluation comporte également des moyens de mesure de la température (thermocouples) au voisinage direct de ladite résistance électrique. La mesure locale de la température permet de comparer l'évolution de la température au voisinage de la résistance, avec des profils de référence. En fonction de l'écart par rapport aux profils de référence, il est possible de déduire des modifications de chaleur spécifique de la plaque. Ces modifications étant fonction de l'encrassement de la plaque, le dispositif permet d'évaluer cet encrassement. Cette solution a en particulier l'inconvénient de modifier temporairement l'échange thermique local. D'autre part, le fait que la mesure de température est réalisée à l'opposé de la surface où est généré le flux supplémentaire rend complexe l'interprétation de cette mesure car elle n'est impactée que par la propagation de la perturbation du flux et non par l'augmentation du flux elle-même.

Le document WO 2009/153323 A1 divulgue un dispositif et un procédé pour la détection et/ou la mesure de l'encrassement dans un échangeur thermique. Le procédé consiste à mesurer la valeur résistive d'une sonde de température disposée au niveau d'une paroi de l'échangeur. Plus particulièrement, pendant deux durées successives, la résistance est soumise à deux niveaux de puissance constante. Le premier niveau de puissance P1, choisi de sorte que le flux de chaleur provoqué par effet Joule ait une influence sur la paroi de l'échangeur et non sur la couche d'encrassement lorsqu'elle existe, est inférieur au second niveau de puissance P2 qui est choisi de sorte que le flux de chaleur provoqué par effet Joule ait un impact à la fois sur la paroi de l'échangeur et sur la couche d'encrassement lorsqu'elle existe. Les durées d'application des puissances et leur enchaînement sont choisis de manière à s'assurer de la stabilité des conditions de fonctionnement et à atteindre un régime thermique stationnaire à la fin de l'application des puissances P1 et P2. Des mesures de valeurs résistives sont respectivement effectuées à la fin de l'application des puissances. La différence des mesures de valeurs résistives constitue alors une mesure de la résistance thermique de la couche d'encrassement. Par conséquent, la différence des mesures de valeurs résistives constitue une valeur caractéristique du niveau d'encrassement de la paroi de l'échangeur.

Les trois dispositifs discutés ci-dessus sont dédiés à la mesure de températures locales et/ou de flux thermiques locaux et, par là même, permettent de remonter au coefficient d'échange thermique local, et donc d'évaluer les conditions de fonctionnement locales d'un échangeur thermique. Toutefois, chacune de ces évaluations nécessite de faire des hypothèses fortes sur l'environnement thermique de la sonde de température pour extraire, des mesures physiques, la valeur locale du coefficient d'échange. Par ailleurs, aucune de ces évaluations ne permet de discriminer de quel côté de la paroi se situe l'encrassement. En outre, une fois la valeur locale du coefficient d'échange obtenue, il n'est pas possible, si les termes de convection varient, d'identifier les contributions respectives des phénomènes de convection et de conduction (dans les parois et dans les éventuelles couches d'encrassement) parmi les diverses contributions au coefficient d'échange. Enfin, et même dans le cas de conditions favorables permettant de préciser le coefficient d'échange d'une paroi et par là-même l'encrassement, aucune méthodologie permettant d'obtenir des informations sur l'inertie thermique de l'encrassement n'est indiquée.

Par ailleurs, il est connu du document US 2005/217841 A1 un dispositif et un procédé de mesure de flux thermique pour un échangeur de chaleur, propre à mesurer le degré de corrosion de l'échangeur.

Un objet de la présente invention est de répondre, au moins en partie, aux limitations précédemment exposées.

Les autres objets, caractéristiques et avantages de la présente invention apparaîtront à l'examen de la description suivante et des dessins d'accompagnement. Il est entendu que d'autres avantages peuvent être incorporés.

## RÉSUMÉ DE L'INVENTION

Pour atteindre cet objectif, selon un premier aspect, la présente invention prévoit un système d'évaluation selon la revendication 1 du jeu de revendications annexé.

Le système selon le premier aspect de l'invention permet d'accéder à des mesures permettant de quantifier le régime instationnaire d'au moins l'une des mono-sondes.

Le deuxième aspect de la présente invention concerne un procédé d'évaluation selon la revendication 2 du jeu de revendications annexé. Le procédé met en œuvre un système d'évaluation selon la revendication 1 du jeu de revendications annexé.

Qu'un encrassement se soit déposé d'un côté ou des deux côtés de la paroi, le premier procédé selon le deuxième aspect de l'invention permet tout d'abord d'évaluer au moins l'une des conditions de fonctionnement suivantes, définie à la première hauteur $h_1$ de circulation :

- la température $Tf_1$ du fluide *f* circulant du premier côté de la paroi,
- la température $Tf'_1$ du fluide *f'* circulant du second côté de la paroi,
- la présence ou non d'un encrassement du premier côté de la paroi, et
- la présence ou non d'un encrassement du second côté de la paroi,

du fait que chacune des résistances thermiques $R_1$ et $R'_1$ déterminées est proportionnelle à une somme de résistances thermiques de convection et éventuellement d'encrassement *Rcv+Re* et *R'cv+R'e.* L'on peut supposer, en première approximation, que les résistances thermiques de convection *Rcv* et *R'cv* et les résistances thermiques d'encrassement Re et *R'e* ne dépendent pas de la hauteur de circulation des fluides, par exemple entre les première et deuxième hauteurs $h_1$ et $h_2$ de circulation des fluides.

Le procédé permet ainsi de discriminer de quel(s) côté(s) de la paroi un encrassement s'est déposé, par exemple depuis une évaluation nominale ou antérieure des conditions de fonctionnement de l'échangeur de chaleur.

En faisant l'hypothèse que les régimes hydrauliques de l'échangeur de chaleur, au moins au niveau où est disposée la première bi-sonde, sont stables dans le temps, autrement dit que les valeurs des résistances de convection *Rcv* et *R'cv* ne varient pas, par exemple par rapport à des valeurs nominales connues, il est possible d'évaluer les résistances d'encrassement *Re* et *R'e* de chaque côté de la paroi. Notons qu'il est dès lors possible de calculer au moins l'une parmi l'épaisseur de l'encrassement du premier côté de la paroi et l'épaisseur de l'encrassement du second côté de la paroi, en fonction de l'une respective parmi la résistance d'encrassement *Re* du premier côté de la paroi et la résistance d'encrassement *R'e* du second côté de la paroi et de l'une respective parmi une conductivité thermique de l'encrassement du premier côté de la paroi et une conductivité thermique de l'encrassement du second côté de la paroi.

En faisant l'hypothèse que les régimes hydrauliques de l'échangeur de chaleur, au moins au niveau où est disposée la première bi-sonde, sont connus, le premier procédé selon le deuxième aspect de l'invention permet en outre d'accéder au produit $M'_e.Cp'_e$ de la masse $M'_e$ par la capacité calorifique $Cp'_e$ de l'encrassement du second côté de la paroi (masse du volume de l'encrassement défini par l'épaisseur de l'encrassement et la surface de la sonde (ou de la bi-sonde)). Dès lors, si l'encrassement a fait par ailleurs l'objet de caractérisation physique, et notamment si sa densité et sa capacité calorifique $Cp'_e$ sont connues, l'évaluation du produit $M'_e.Cp'_e$ permet de déterminer l'épaisseur de l'encrassement à cet emplacement.

Par hypothèse d'évolution continue et d'uniformité ou de variation linéaire des résistances thermiques entre les valeurs mesurées aux hauteurs de circulation $h_1$ et $h_2$ des fluides *f* et *f'*, et par application des principes de conservation de l'énergie entre ces deux hauteurs de circulation, le procédé selon le deuxième aspect de l'invention permet tout d'abord de relier algébriquement le flux thermique traversant la paroi aux débits massiques $Q_m$ et $Q'_m$ des fluides *f* et *f'* circulant de part et d'autre de la paroi. Connaissant les caractéristiques physiques des fluides *f* et *f'* (et notamment la masse volumique et la capacité calorifique de chaque fluide *f* et *f'*), les valeurs des débits massiques $Q_m$ et $Q'_m$ donnent accès aux régimes d'écoulement de chaque côté de la paroi et donc à une évaluation des résistances de convection *Rcv, R'cv* de part et d'autre de la paroi. Ceci permet d'isoler la contribution, à la résistance thermique globale, des résistances d'encrassement *Re, R'e* de chaque côté de la paroi.

Le procédé selon le deuxième aspect de l'invention permet en outre d'accéder au produit $M'_e.Cp'_e$ de la masse $M'_e$ par la capacité calorifique $Cp'_e$ de l'encrassement du second côté de la paroi. Comme précédemment, si l'encrassement a fait par ailleurs l'objet de caractérisation physique, et notamment si sa densité et sa capacité calorifique $Cp'_e$ sont connues, l'évaluation du produit $M'_e.Cp'_e$ permet de déterminer l'épaisseur de cet encrassement.

Pour atteindre ce résultat, le procédé ne nécessite pas de faire l'hypothèse que les régimes hydrauliques de l'échangeur de chaleur, au moins au niveau où est disposée la première bi-sonde, sont stables dans le temps, ni même qu'ils sont connus. Ces régimes hydrauliques sont en effet calculés.

Un troisième aspect de la présente invention concerne un produit programme d'ordinateur comprenant des instructions, qui, lorsqu'elles sont interprétées et exécutées par au moins un processeur d'un dispositif de supervision auquel chacune des mono-sondes d'une première bi-sonde et d'une deuxième bi-sonde du système d'évaluation selon le premier aspect est destinée à être reliée fonctionnellement,, effectuent au moins les unes parmi :

- l'étape de détermination et la première étape d'évaluation du procédé concerné par le deuxième aspect de l'invention, et
- l'étape de détermination, la première étape de calcul et la première étape d'évaluation du procédé concerné par le deuxième aspect de l'invention.

En variante, le troisième aspect de la présente invention concerne un média non-transitoire lisible par un ordinateur, comprenant des instructions, qui, lorsqu'elles sont interprétées et exécutées par au moins un processeur, par exemple du dispositif de supervision, effectuent au moins les unes parmi :

- l'étape de détermination et la première étape d'évaluation du procédé concerné par le deuxième aspect de l'invention, et
- l'étape de détermination, la première étape de calcul et la première étape d'évaluation du procédé concerné par le deuxième aspect de l'invention.

## BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La FIGURE 1 est une représentation schématique en perspective d'un circuit résistif d'une mono-sonde de chaque bi-sonde selon un aspect de l'invention ;

La FIGURE 2 est une représentation schématique en perspective d'une mono-sonde de chaque bi-sonde selon un aspect de l'invention ;

La FIGURE 3 est une représentation schématique en perspective d'un assemblage de chaque bi-sonde selon un aspect de l'invention ;

La FIGURE 4 est une représentation schématique en perspective de chaque bi-sonde selon un aspect de l'invention ;

La FIGURE 5 représente la bi-sonde de la FIGURE 4 à laquelle ont été connectés un dispositif d'alimentation électrique et un dispositif de mesure de courant électrique ;

La FIGURE 6 représente un système selon le premier aspect de l'invention ;

La FIGURE 7 représente schématiquement une vue en coupe transversale des deux bi-sondes telles qu'illustrées sur la FIGURE 6 disposées sur la paroi de l'échangeur thermique ;

La FIGURE 8 est identique à la figure 7 et comprend en outre des illustrations des notations employées dans les équations ci-dessous ;

La FIGURE 9 est un ordinogramme détaillant un mode de réalisation de certaines étapes du procédé selon le deuxième aspect de l'invention ;

La FIGURE 10 est un ordinogramme détaillant un mode de réalisation de certaines étapes du procédé selon le deuxième aspect de l'invention ;

La FIGURE 11 est un ordinogramme de différentes étapes du procédé selon le deuxième aspect de l'invention ;

La FIGURE 12 est un ordinogramme de différentes étapes du procédé selon le deuxième aspect de l'invention ;

La FIGURE 13 représente sous forme graphique d'un ensemble d'évolutions de température d'une mono-sonde en fonction du temps ;

La FIGURE 14 est un agrandissement du graphe illustré sur la figure 13 ; et

La FIGURE 15 représente sous forme graphique les écarts entre l'évolution de la température de la mono-sonde telle que mesurée et chacune parmi l'ensemble d'évolutions de température représenté sur les figures 13 et 14.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les dimensions relatives des différents éléments du système selon l'invention tels qu'illustrés sur la figure 6 ne sont pas représentatives de la réalité.

## DESCRIPTION DÉTAILLÉE DE L'INVENTION

Avant d'entamer une revue détaillée de modes de réalisation de l'invention, sont énoncées ci-après des caractéristiques optionnelles du procédé selon le deuxième aspect de l'invention, qui peuvent éventuellement être utilisées en association ou alternativement :

- l'une au moins une des mono-sondes dans laquelle l'évolution du courant électrique est mesurée est disposée du premier côté de la paroi. Le cas échéant, elle est en outre disposée directement contre la paroi ;
- la première étape d'évaluation comprend une conversion de l'évolution du courant électrique telle que mesurée en une évolution de la température de la mono-sonde dans laquelle la mesure a été réalisée. Cette conversion est par exemple réalisée par le dispositif de supervision et éventuellement selon une loi d'évolution propre à la mono-sonde dans laquelle la mesure a été réalisée ;
- la première étape d'évaluation peut comprendre en outre une recherche, par exemple dichotomique, de la valeur du produit $M'_e.Cp'_e$ sur un intervalle de valeurs [$M'_e.Cp'_e(min)$, $M'_e.Cp'_e(max)$] prédéterminé. Cette recherche comprend un calcul d'un écart, par exemple relatif, entre l'évolution de la température de la mono-sonde et chacune parmi des évolutions de température calculées, par exemple par le dispositif de supervision, au moins en fonction de la résistance de convection *R'cv* du second côté de la paroi et d'un ensemble correspondant de valeurs transitoires {$M'_e.Cp'_e(i)$} choisies successivement dans l'intervalle de valeurs [$M'_e.Cp'_e(min)$, $M'_e.Cp'_e(max)$] prédéterminé. La valeur du produit $M'_e.Cp'_e$ est alors évaluée comme étant égale à la valeur transitoire $M'_e.Cp'_e(i)$ donnant un écart inférieur à une valeur seuil prédéterminée ;
- en alternative ou en complément à la caractéristique optionnelle précédente, la première étape d'évaluation comprend en outre une recherche de la valeur du produit $M'_e.Cp'_e$ sur un intervalle de valeurs [$M'_e.Cp'_e(min)$, $M'_e.Cp'_e(max)$] prédéterminé, cette recherche comprenant un calcul d'écart entre l'évolution de la température de la mono-sonde et chacune parmi un ensemble d'évolutions de température calculé au moins en fonction de la résistance de convection *R'cv* du second côté de la paroi et d'un ensemble correspondant de valeurs transitoires {$M'_e.Cp'_e(i)$} prédéterminées dans l'intervalle de valeurs [$M'_e.Cp'_e(min)$, $M'_e.Cp'_e(max)$] prédéterminé. Ledit ensemble d'évolutions est par exemple stocké, sous forme numérique, sur un support de mémorisation non volatile du dispositif de supervision. La valeur du produit $M'_e.Cp'_e$ est alors évaluée comme étant égale à la valeur transitoire $M'_e.Cp'_e(i)$ donnant un écart minimal. Le cas échéant, l'ensemble d'évolutions a été choisi dans une bibliothèque de tels ensembles d'évolutions en fonction des conditions de fonctionnement de l'échangeur de chaleur évaluées selon le procédé préalablement à la première étape d'évaluation ;
- chaque comparaison peut être réalisée sur un intervalle de temps couvert par la mesure de l'évolution du courant électrique et limité à un régime instationnaire de cette évolution ;
- le procédé peut comprendre en outre une deuxième étape d'évaluation de la chaleur spécifique $Cp'_e$ à pression constante de l'encrassement déposé du second côté de la paroi. Cette deuxième évaluation peut être réalisée en fonction de la valeur du produit $M'_e.Cp'_e$ telle que précédemment évaluée et d'une valeur de la masse $M'_e$ de l'encrassement déposé du second côté de la paroi. Cette valeur de la masse $M'_e$ a pu être déduite à partir de paramètres caractérisant les conditions de fonctionnement de l'échangeur de chaleur du second côté de la paroi, parmi lesquels les paramètres suivants : la résistance thermique $R'_1$ (ou $R'_2$), la résistance de convection *R'cv,* une conductivité thermique et une masse volumique de l'encrassement déposé du second côté de la paroi ;
- selon le procédé, la différence entre les hauteurs $h_1$ et $h_2$ auxquelles sont respectivement situées les première et deuxième bi-sondes est paramétrée de sorte que des différences de températures $Tf_1$-$Tf_2$ du fluide *f* et $Tf'_1$-$Tf'_2$ du fluide *f'* entre les hauteurs $h_1$ et $h_2$ soient perceptibles par le dispositif de mesure comme une différence de mesures de courant au moins entre une mono-sonde de la première bi-sonde et une mono-sonde de la deuxième bi-sonde ;
- selon le procédé, les propriétés physiques de chaque fluide *f, f'* comprennent la chaleur spécifique, la masse volumique, la capacité calorifique, la conductivité thermique et la viscosité dynamique ;

- selon le procédé, les paramètres géométriques de l'échangeur thermique comprennent une surface d'échange thermique comprise entre les hauteurs $h_1$ et $h_2$, un diamètre hydraulique et trois paramètres *a, b* et *c* dépendant de la géométrie de l'échangeur thermique.

Selon le procédé, les sous-étapes suivantes sont de préférence coordonnées par le dispositif de supervision :

à compter d'un premier instant *t1 :*

- alimenter les mono-sondes de la première bi-sonde avec des courants électriques d'intensités différentes,
- mesurer le courant électrique dans chacune des mono-sondes, et
- calculer la température *T11(t1), T12(t1)* de chaque mono-sonde au moins en fonction de la mesure de courant correspondante, et

à compter d'un deuxième instant *t2,* différent du premier instant *t1 :*

- alimenter les mono-sondes de la première bi-sonde avec des courants électriques d'intensités différentes,
- mesurer le courant électrique dans chacune des mono-sondes, puis
- calculer la température *T11(t2), T12(t2)* de chaque mono-sonde au moins en fonction de la mesure de courant correspondante.

Selon le deuxième procédé, les sous-étapes suivantes sont de préférence coordonnées par le dispositif de supervision :

à compter d'un premier instant *t1 :*

- alimenter les mono-sondes de l'une respective parmi les première et deuxième bi-sondes avec des courants électriques d'intensités différentes,
- mesurer le courant électrique dans chacune des mono-sondes, et
- calculer la température *T11(t1), T12(t1), T21(t1), T22(t1)* de chaque mono-sonde au moins en fonction de la mesure de courant correspondante, puis

à compter d'un deuxième instant *t2,* différent du premier instant *t1 :*

- alimenter les mono-sondes de l'une respective parmi les première et deuxième bi-sondes avec des courants électriques d'intensités différentes,
- mesurer le courant électrique dans chacune des mono-sondes, et
- calculer la température *T11(t2), T12(t2), T21(t2), T22(t2)* de chaque mono-sonde au moins en fonction de la mesure de courant correspondante,

Selon le procédé, l'étape de mesure de l'évolution du courant électrique dans au moins une des mono-sondes comprend au moins l'une parmi la mesure du courant électrique dans au moins l'une des mono-sondes à compter du premier instant *t1* et la mesure du courant électrique dans au moins l'une des mono-sondes à compter du deuxième instant t2.

L'usage de l'article indéfini « un » ou « une » pour un élément ou une étape n'exclut pas, sauf mention contraire, la présence d'une pluralité de tels éléments ou étapes.

On entend par mesurer, déterminer, calculer ou évaluer des paramètres, le fait de mesurer, déterminer, calculer ou évaluer les valeurs de ces paramètres, respectivement. Lesdits paramètres comprennent notamment ceux d'un courant électrique et des conditions de fonctionnement d'un échangeur de chaleur.

On entend par « circuit résistif » un chemin ou une piste de conduction électrique allant d'un point à un autre, par exemple d'un connecteur à un autre ou d'une borne à une autre, en présentant de préférence des sinuosités de façon à couvrir, de préférence en grande partie, une surface généralement plane.

Le mot « diélectrique » qualifie un matériau dont la conductivité électrique est suffisamment faible dans l'application donnée pour servir d'isolant électrique.

On entend par « encapsulant » le revêtement résultant d'une opération d'encapsulation consistant à enrober au moins partiellement un objet pour l'isoler électriquement et éventuellement le protéger.

On entend par « conforme » la qualité géométrique d'une couche qui présente une même épaisseur malgré des changements de direction de couche, par exemple au niveau de flancs d'une sonde de température.

On entend par un élément « à base » d'un matériau A, un élément comprenant ce matériau A et éventuellement d'autres matériaux.

On entend par « courant électrique » un déplacement d'ensemble de porteurs de charges électriques, généralement des électrons, au sein d'un matériau conducteur. Le courant électrique est défini par un ensemble de paramètres parmi lesquels l'intensité, la tension et la puissance.

On entend par « matériau électriquement conducteur thermosensible » un matériau électriquement conducteur, tel qu'un métal, dont la résistance varie avec la température selon une loi d'évolution propre au matériau électriquement conducteur. Dans le cadre de l'invention, un circuit résistif 111, 121, 211, 221 à base d'un tel matériau, constitue en partie une mono-sonde 11, 12, 21, 22 dont la température varie en fonction de la résistance du circuit résistif 111, 121, 211, 221 selon la loi d'évolution *ad hoc.* La loi d'évolution s'écrit généralement sous la forme $T = T_0 + \frac{\frac{R_T}{R_0}-1}{\alpha}$ où, lorsqu'on l'applique dans le cadre de l'invention, $T_0$ est une température de référence (en °C), $T$ est la température (en °C) de la mono-sonde 11, 12, 21, 22, $R_T$ et $R_0$ sont les résistances électriques (en ohm) du circuit résistif 111, 121, 211, 221respectivement à la température T de la mono-sonde 11, 12, 21, 22 et à la température $T_0$, et $\alpha$ est une constante (en $°C^{-1}$) appelée coefficient thermique et définie dans la norme relative au matériau considéré.

On entend par « hauteur de circulation », la distance orientée dans un sens de circulation (ou dans le sens opposé) à parcourir pour atteindre une position donnée sur un chemin de circulation. Ici, la circulation est celle d'un fluide le long d'une paroi, et plus particulièrement de deux fluides *f* et *f'* de part et d'autre de la paroi ; en configuration de circulation des fluides *f* et *f'* à contre-courant de part et d'autre de la paroi, la distance peut être orientée dans le sens de circulation du fluide *f* circulant d'un premier côté de la paroi, et dans le sens opposé, au sens de circulation du fluide *f'* d'un second côté de la paroi ; le chemin de circulation est au moins en partie porté par la paroi.

On entend par « débit », le débit massique (en kg/s), sachant que ce débit massique est directement proportionnel au débit volumique (en $m^3/s$), le coefficient de proportionnalité étant ici la masse volumique (en $kg/m^3$) du fluide dont le débit est considéré.

On entend par « chaleur spécifique Cp » d'un fluide la chaleur spécifique à pression constante du fluide. Elle s'exprime en $J \cdot kg^{-1} \cdot K^{-1}$.

Le « diamètre hydraulique » est communément utilisé pour le calcul des écoulements dans un tube, une conduite hydraulique ou un canal. En utilisant ce diamètre particulier, on peut faire des calculs similaires à ceux d'un tube circulaire. Cette grandeur est homogène à une longueur.

Une bi-sonde 1, 2 de température du système 0 selon le premier aspect de l'invention est décrite ci-dessous en référence aux figures 1 à 5.

Cette description vaut pour l'une au moins des deux bi-sondes 1 et 2, et de préférence pour toutes les bi-sondes 1, 2, mises en oeuvre par le procédé selon le deuxième aspect de l'invention.

L'une des deux bi-sondes 1 et 2 comprend deux mono-sondes 11, 12 et 21, 22, ainsi qu'une couche 13, 23 à base d'un matériau thermiquement isolant. La couche 13, 23 est intercalée entre les deux mono-sondes 11, 12 et 21, 22 de chacune des deux bi-sondes 1 et 2.

Une mono-sonde 11, 12, 21, 22 de température est décrite ci-dessous en référence aux figures 1 à 5.

Cette description vaut pour l'une au moins des mono-sondes 11, 12, 21, 22, et de préférence pour toutes les mono-sondes 11, 12, 21, 22, mises en œuvre par le procédé selon le deuxième aspect de l'invention.

Chaque mono-sonde 11, 12, 21, 22 comprend un circuit résistif 111, 121, 211, 221 par exemple tel qu'illustré sur la figure 1. Chaque circuit résistif 111, 121, 211, 221 est mis en forme de manière à maximiser la surface développée. A cette fin et comme illustré sur la figure 1, chaque circuit résistif 111, 121, 211, 221 peut prendre la forme d'un serpentin de manière à faire tenir une grande longueur de piste de conduction électrique sur une surface de dimensions limitées. Chaque circuit résistif 111, 121, 211, 221 peut prendre d'autres formes, par exemple une forme en spirale. La largeur de la piste est typiquement comprise entre 10 $\mu$m et 1 mm et est par exemple égale à 140 $\mu$m. L'épaisseur de la piste est typiquement comprise entre 5 $\mu$m et 30 $\mu$m et est par exemple égale à 10 $\mu$m.

Chaque circuit résistif 111, 121, 211, 221 est à base d'un matériau électriquement conducteur thermosensible. Par exemple, chaque circuit résistif 111, 121, 211, 221 est à base d'un métal thermosensible, choisi par exemple parmi le nickel, le platine, le tungstène, le cuivre et tout alliage à base de ces métaux, car tous possèdent la propriété d'avoir un coefficient thermique $\alpha$ (en $°C^{-1}$) élevé, soit une variation suffisante de résistance en fonction de la température du circuit résistif 111, 121, 211, 221 selon une loi proportionnelle ou polynomiale pour pouvoir être mesurée avec des dispositifs de mesures de courant 20 conventionnels. D'autres types de métaux peuvent être utilisés, si ceux-ci présentent un coefficient thermique suffisamment élevé.

Selon la loi d'évolution *ad hoc,* la résistance $R_T$ de chaque circuit résistif 111, 121, 211, 221 peut être convertie en température *T*, en connaissant les caractéristiques de thermo-sensibilité $\alpha$, $T_0$ et $R_0$ du métal constitutif du circuit résistif 111, 121, 211, 221. La résistance $R_T$ du circuit résistif 111, 121, 211, 221 peut être déterminée en connaissant au moins deux paramètres parmi la puissance *P*, l'intensité *I* et la tension *U* du courant électrique circulant dans le circuit résistif 111, 121, 211, 221. La sensibilité thermique de chaque mono-sonde 11, 12, 21, 22 s'exprime en °C/W ; elle dépend de son environnement thermique. La sensibilité thermique de chaque mono-sonde 11, 12, 21, 22 peut être typiquement d'environ 1°C/W, ce qui signifie que la température de chaque mono-sonde 1, 2 s'élève de 1°C pour une puissance appliquée de 1 W.

Que le courant électrique circulant dans un circuit résistif 111, 121, 211, 221 soit continu ou alternatif, différents dispositifs de mesure de courant électrique 20, tels qu'un dispositif de mesure de tension (voltmètre), un dispositif de mesure d'intensité (ampèremètre) ou un dispositif de mesure de puissance peuvent être utilisés pour calculer la tension, l'intensité ou la puissance respectivement du courant électrique circulant dans le circuit résistif. Le dispositif de mesure 20 utilisé peut être choisi pour mesurer le paramètre non imposé, et donc non connu, par le dispositif d'alimentation 10 qui de façon corrélée peut être un dispositif d'alimentation en tension ou en intensité.

Comme illustré sur la figure 2, chaque circuit résistif 111, 121, 211, 221 peut être encapsulé dans un encapsulant 113, 123, 213, 223. L'encapsulant 113, 123, 213, 223 peut enrober complétement le circuit résistif 111, 121, 211, 221, ou en partie seulement. L'encapsulant 113, 123, 213, 223 peut être appliqué par lamination d'un film, ou de deux films, d'un côté ou des deux côtés du circuit résistif 111, 121, 211, 221, respectivement. En alternative ou en combinaison, le circuit résistif 111, 121, 211, 221 peut être imprimé ou déposé directement sur un film d'encapsulant 113, 123, 213, 223. L'encapsulant 113, 123, 213, 223 est à base d'un matériau diélectrique, tel qu'un polymère. Ce polymère peut être un polyimide, tel que du Kapton®. Un film en Kapton® peut présenter par exemple des dimensions de 30 mm x 60 mm x 25 à 50 $\mu$m. Les dimensions et la forme des films, et donc de l'encapsulant 113, 123, 213, 223, peuvent être adaptées à la surface dans laquelle s'inscrit le circuit résistif 111, 121, 211, 221. L'encapsulant 113, 123, 213, 223 joue le rôle de protection et d'isolation électrique du circuit résistif 111, 121, 211, 221. L'encapsulant 113, 123, 213, 223 est de préférence propre à résister aux températures auxquelles la bi-sonde 1, 2 selon l'invention est destinée à être soumise. Si ces températures sont élevées, par exemple supérieures à 200°C, voire de l'ordre de 350°C pour des applications au secteur pétrolier notamment, les matériaux constituant la bi-sonde 1, 2 peuvent être adaptés, et notamment l'encapsulant 113, 123, 213, 223 est de préférence un matériau thermostable.

Chaque circuit résistif 111, 121, 211, 221 et son encapsulant 113, 123, 213, 223 forment ainsi une mono-sonde 11, 12, 21, 22. Chaque mono-sonde couvre typiquement une surface de forme libre, allant de un à quelques $cm^2$, adaptable à la zone de la paroi 40 de l'échangeur de chaleur sur laquelle elle est destinée à être disposée. Chaque mono-sonde est ainsi de faible épaisseur ce qui lui assure une certaine flexibilité et donc une adaptation facilitée à presque toute forme de support. En outre, il est dès lors possible de négliger, en bonne approximation, les pertes thermiques par les flancs de la mono-sonde 11, 12, 21, 22. Ainsi, l'invention n'est nullement limitée aux exemples illustrés sur les figures 6 et 7 où la paroi 40 est plane ; la paroi 40 peut prendre toute forme, et par exemple peut être refermée sur elle-même, par exemple de sorte à former un tube.

Chaque mono-sonde 11, 12, 21, 22 a deux fonctions : celle de dissipateur à effet Joule et celle de mesure résistive de température. A cette fin, et comme illustré sur la figure 5, chaque mono-sonde peut être câblée avec quatre fils 112, 212, 122, 222, le cas échéant à travers l'encapsulant 113, 123, 213, 223 : deux fils pour l'alimentation en courant électrique et deux fils pour la mesure de tension aux bornes du circuit résistif 111, 121, 211, 221 correspondant, les deux fils pour la mesure de tension étant disposés en parallèle des deux fils pour l'alimentation en courant électrique.

Comme introduit plus haut et comme illustré sur les figures 3 et 4, chaque bi-sonde 1, 2 comprend en outre la couche 13, 23 à base d'un matériau isolant thermique. La couche 13, 23 est intercalée entre les deux mono-sondes 11, 12, 21, 22 de la bi-sonde 1, 2, par exemple par collage. Le collage d'une mono-sonde sur la couche 13, 23 peut nécessiter un adhésif, par exemple adapté à un collage de la couche 13, 23 sur un film polyimide constituant en partie l'encapsulant 113, 123, 213, 223 de chaque mono-sonde 11, 12, 21, 22. La couche 13, 23 est d'une surface égale ou supérieure à celle de chaque mono-sonde 11, 12, 21, 22. La couche 13, 23 crée une résistance thermique $R_{TH}$ entre les deux mono-sondes de chaque bi-sonde 1, 2. Cette résistance thermique $R_{TH}$ est fonction de l'épaisseur *e* et de la conductivité thermique $\lambda$ du matériau thermiquement isolant à base duquel est constituée la couche 13, 23 : $R_{TH} = \lambda / e$. La résistance thermique $R_{TH}$ peut déterminer, à elle seule et/ou en bonne approximation, la résistance thermique $Rs_1$, $Rs_2$ de la bi-sonde 1, 2. Toutefois, la résistance thermique $Rs_1$, $Rs_2$ de chaque bi-sonde peut également être caractérisée par des étalonnages en chauffant alternativement une mono-sonde 11, 12, 21, 22, puis l'autre 12, 11, 22, 21, pour établir les relations entre les flux thermiques créés (qui sont connus par calcul) et les écarts d'évolution de température créés entre les deux mono-sondes 11, 12, 21, 22 (qui sont mesurés). Une telle caractérisation est notamment envisagée lorsque la bi-sonde est placée entre deux corps matériaux de résistivités connues et très différentes. La bi-sonde 1, 2 présente ainsi une résistance thermique $Rs_1$, $Rs_2$ fonction de l'épaisseur e et de la conductivité thermique $\lambda$ de la couche 13, 23 intercalée entre les deux mono-sondes.

Ainsi, les températures d'équilibre des mono-sondes 11, 12, 21, 22 de la bi-sonde 1, 2 peuvent être différentes, voire indépendantes, l'une de l'autre, en particulier lorsque l'on applique des intensités électriques différentes aux circuits résistifs 111, 121, 211, 221. De la sorte, la bi-sonde permet d'associer des flux thermiques la traversant à des écarts de température, ou à des écarts d'évolution de température, entre les deux mono-sondes 11, 12, 21, 22.

Comme illustré sur la figure 5, chaque circuit résistif 111, 121, 211, 221 est destiné à être lié, en particulier depuis sa paire de connecteurs et par liaisons filaires 112, 212, 122, 222, et le cas échéant à travers l'encapsulant 113, 123, 213, 223 d'une part au dispositif d'alimentation 10, d'autre part au dispositif de mesure 20. Le dispositif d'alimentation électrique 10 permet l'alimentation électrique indépendante et coordonnée, par exemple en courant continu, de chacune des mono-sondes 11, 12, 21, 22. Le dispositif de mesure 20 permet des mesures indépendantes de la tension aux bornes du circuit résistif 111, 121, 211, 221 de chacune des mono-sondes, et éventuellement du courant électrique dans le circuit résistif 111, 121, 211, 221 de chacune des mono-sondes. L'indépendance de l'alimentation signifie qu'il est possible de déposer des puissances variables et différentes en fonction du temps dans chaque circuit résistif 111, 121, 211, 221 de chacune des mono-sondes. L'indépendance des mesures tension, et éventuellement de courant, signifie qu'il est possible de mesurer la tension, et éventuellement le courant, et/ou l'évolution de la tension, et éventuellement l'évolution du courant ; dès lors, il est possible de calculer la température et/ou l'évolution de la température, d'une mono-sonde 11, 12, 21, 22 indépendamment de la température et/ou de l'évolution de la température de l'autre mono-sonde 12, 11, 22, 21. La coordination de l'alimentation signifie qu'il est possible d'appliquer des consignes de pilotage de l'alimentation de chaque mono-sonde 11, 12, 21, 22 en fonction de l'alimentation de l'autre mono-sonde 12, 11, 22, 21 selon des stratégies déterminées. Comme mentionné plus haut, le dispositif de mesure 20 utilisé peut être choisi pour mesurer le paramètre non imposé, et donc non connu, par le dispositif d'alimentation 10. Par exemple, le dispositif d'alimentation 10 est un dispositif d'alimentation en intensité et impose donc une valeur d'intensité du courant dans le circuit résistif 111, 121, 211, 221 qu'il alimente et le dispositif de mesure 20 est un voltmètre mesurant la tension aux bornes du circuit résistif 111, 121, 211, 221, de sorte que la loi d'ohm permette de remonter à la résistance $R_T$ du circuit résistif, puis remonter, via la loi d'évolution *ad hoc,* à la température *T1, T2* de la mono-sonde 11, 12, 21, 22 comprenant le circuit résistif. En alternative ou en complément, l'intensité dans chaque circuit résistif peut également être mesurée par le dispositif de mesure 20. Ainsi, le procédé 100 résiste à une erreur qui serait liée à l'alimentation en intensité par le dispositif d'alimentation 10 ou à une erreur dans la communication au dispositif de supervision 30 de la valeur d'intensité du courant déposé dans chaque circuit résistif par le dispositif d'alimentation 20.

L'indépendance et/ou la coordination des alimentations et des mesures, ainsi que certains des différents calculs du procédé selon l'invention, peuvent être assurés par un dispositif de supervision 30 (illustré sur la figure 6) du dispositif d'alimentation 10 et du dispositif de mesure 20. A cette fin, le dispositif de supervision 30 peut comprendre des moyens de traitement numérique, tel qu'un micro-processeur ou un microcontrôleur, ou un dispositif de traitement analogique. Il peut notamment commander les mesures de courant et/ou les calculs de température *T1, T2* de chaque mono-sonde 11, 12, 21, 22 de façon continue ou échantillonnée, par exemple avec une vitesse d'échantillonnage comprise entre une et dix mesures par seconde. Ainsi, le dispositif de supervision 30 peut être configuré en outre pour détecter qu'un régime stationnaire a été atteint dans l'évolution en résistance ou en température de chaque mono-sonde vers une résistance ou une température d'équilibre, respectivement. Le régime stationnaire peut être considéré comme atteint lorsqu'un écart-type calculé par le dispositif de supervision 30 sur les valeurs de résistance ou de température *T1, T2* passe sous une valeur seuil prédéfinie. Dans le contexte de l'invention, les températures d'équilibre de chaque mono-sonde 11, 12, 21, 22 dépendent de l'environnement thermique de la mono-sonde, et dépendent au moins des températures *Tf* et *Tf'* de fluides *f* et *f'* circulant de part et d'autre de la paroi 40 de l'échangeur thermique. Les fluides *f* et *f'* sont généralement choisis en fonction de l'application à laquelle l'échangeur de chaleur est destiné. Ils présentent donc des propriétés physiques connues. Ces propriétés peuvent dépendre des conditions de température, de pression ou autres dans lesquels les fluides se trouvent. Lorsqu'au moins l'une de ces conditions est connue, que ce soit de façon théorique, heuristique ou par sa mesure, les propriétés physiques des fluides peuvent être déterminées en prenant cette condition en compte.

Deux au moins parmi les dispositifs d'alimentation 10, de mesure 20 et de supervision 30 peuvent être intégrés ensemble de façon à ne former qu'un dispositif remplissant les fonctions de chacun des dispositifs intégrés.

Le dispositif de mesure 20 est propre à mesurer, de façon continue ou échantillonnée, l'évolution du courant électrique dans au moins l'une des mono-sondes 11, 12 de la première bi-sonde 1. En complément, le dispositif de mesure 20 est propre à mesurer, de façon continue ou échantillonnée, l'évolution du courant électrique dans l'une des mono-sondes 21, 22 de la deuxième bi-sonde 2. Au vu de ce qui précède, et comme détaillé en outre plus bas, mesurer l'évolution du courant électrique dans une des mono-sondes 11, 12, 21, 22 permet de calculer l'évolution correspondante de la résistance de cette mono-sonde, et par la loi d'évolution *ad hoc,* permet de calculer l'évolution correspondante de la température de la mono-sonde. L'évolution du courant électrique dans une mono-sonde 11, 12, 21, 22, et en particulier de la tension aux bornes du circuit résistif 111, 121, 211, 221 d'une mono-sonde 11, 12, 21, 22, à compter du moment où un courant y est déposé et tant que le courant y est déposé, montre deux phases distinctes : une première phase dit de régime instationnaire RI durant laquelle la tension croît et une deuxième phase dite de régime stationnaire RS durant laquelle la tension atteint et conserve une valeur seuil sensiblement maximale. Les évolutions en résistance et en température de chaque mono-sonde montre, de façon corrélée, les mêmes deux phases distinctes. Ces évolutions ont l'allure de celles illustrées sur la figure 13. Les mesures de courant dans l'une des mono-sondes 11, 12, 21, 22 est par exemple réalisée avec une fréquence d'échantillonnage comprise entre une et dix mesures par seconde.

Le procédé 300 d'évaluation de conditions de fonctionnement d'un échangeur de chaleur selon un aspect de l'invention est décrit ci-dessous en référence aux figures 7 à 15 annexées.

Pour connaître l'environnement thermique immédiat de chaque bi-sonde 1, 2 et de la paroi 40 sur laquelle les deux bi-sondes 1, 2 sont fixées, il est utile de déterminer différents paramètres caractérisant localement cet environnement. Parmi ces paramètres, l'on compte ceux relatifs aux régimes de convection se produisant de chaque côté de la paroi 40, la résistance thermique *Rp* de la paroi 40, la résistance thermique $Rs_1$, $Rs_2$ de chaque bi-sonde 1, 2, les résistances thermiques d'encrassement Re et *R'e* de chaque côté de la paroi 40, les températures $Tf_1$, $Tf'_1$ des fluides *f* et *f'* s'écoulant de chaque côté de la paroi 40 à une première hauteur $h_1$ de circulation des fluides, les températures $Tf_2$, $Tf'_2$ des fluides *f* et *f'* s'écoulant de chaque côté de la paroi 40 à une deuxième hauteur $h_2$ de circulation des fluides, et le flux thermique $\Phi$ traversant la paroi 40.

Les régimes de convection se produisant de chaque côté de la paroi 40 sont quantifiables en résistances thermiques de convection *Rcv* et *R'cv* de chaque côté de la paroi 40. Ces résistances thermiques peuvent varier notamment en fonction de la hauteur de circulation des fluides. Auquel cas, il est possible de les décliner en des valeurs de résistances thermiques de convection $Rcv_1$ et $R'cv_1$ à la première hauteur $h_1$ de circulation des fluides et en des valeurs $Rcv_2$ et $R'cv_2$ *à* la deuxième hauteur $h_2$ de circulation des fluides. Il peut en aller de même pour les résistances thermiques d'encrassement *Re* et *R'e*, ainsi que pour les résistances thermiques *R* et *R',* dites globales, qui sont la somme des contributions des résistances thermiques de convection et d'encrassement de chaque côté de la paroi : $R = Rcv+Re$ et $R' = R'cv+R'e$.

La résistance thermique *Rp* de la paroi 40 peut être supposée invariante en temps et indépendante de la hauteur de circulation des fluides. Elle peut être une résistance thermique de référence. Comme discuté plus haut, la résistance thermique $Rs_1$, $Rs_2$ de chaque bi-sonde 1, 2 peut en bonne approximation être considérée égale à la résistance thermique $R_{TH}$ de la couche 13, 23 isolant thermiquement les mono-sondes 11, 12, 21, 22 entre elles ; en alternative, la résistance thermique $Rs_1$, $Rs_2$ de chaque bi-sonde 1, 2 peut être mesurée.

Pour évaluer les conditions de fonctionnement d'un échangeur de chaleur, une première bi-sonde 1 de température est disposée, comme illustré sur la figure 6, sur la paroi 40 de l'échangeur de chaleur à la première hauteur *h1* de circulation des fluides. Une deuxième bi-sonde 2 de température est en outre disposée, comme illustré sur la figure 6, sur la paroi 40 de l'échangeur de chaleur à la deuxième hauteur *h2* de circulation des fluides. Chaque bi-sonde 1, 2 est de préférence disposée à un emplacement de la paroi 40 à travers laquelle s'opère un transfert de chaleur, à destination fonctionnelle, entre les deux fluides *f* et *f'* circulant de part et d'autre de la paroi 40 et sur laquelle est susceptible de se déposer un encrassement 50, 50'. De la sorte, les conditions de fonctionnement, éventuellement dégradées, de l'échangeur de chaleur peuvent être évaluées et cette évaluation peut permettre une prise de décision quant à la réalisation d'une opération de remise en état ou de remplacement de la paroi 40, voire de l'échangeur de chaleur.

Chaque bi-sonde 1, 2 est de préférence disposée sur la paroi 40 lorsque celle-ci n'est pas recouverte d'un encrassement 50, 50' ou sur une partie non-encrassée de la paroi 40, de sorte d'être directement en contact avec la paroi 40. Chaque bi-sonde 1, 2 peut indifféremment être disposée d'un côté ou de l'autre de la paroi 40. Un encrassement 50, 50' peut indifféremment être destiné à se former du côté de la paroi 40 où une des bi-sondes 1, 2 est disposée, de l'autre côté, ou des deux côtés de la paroi 40. L'encrassement 50, 50' peut être destiné à se former au moins en partie sur au moins une des bi-sondes 1, 2 et s'étendre de toute part autour de celle-ci le long de la paroi 40. Comme illustré sur la figure 7, lorsque l'encrassement 50 se forme notamment du côté de la paroi 40 où les bi-sondes 1, 2 sont disposées, cet encrassement 50 peut être conforme.

L'encrassement 50 formé d'un côté de la paroi 40 peut être d'une nature différente de l'encrassement 50' formé de l'autre côté de la paroi 40. La nature et/ou l'épaisseur des encrassements 50, 50' peut dépendre de la nature des fluides *f* et *f',* respectivement, ainsi que de leur températures *Tf* et *Tf'.* La nature et/ou l'épaisseur des encrassements 50, 50' peut également dépendre de la géométrie et/ou de la nature et/ou de l'état de surface de la paroi 40. La nature et/ou l'épaisseur des encrassements 50, 50' peut dépendre des régimes d'écoulement des fluides *f* et *f'* circulant de part et d'autre de la paroi 40. Des écoulements à contre-courant des fluides *f* et *f'* sont illustrés sur la figure 8, mais le procédé selon l'invention s'applique également dans d'autres configurations d'écoulements, et notamment pour des écoulements à co-courant. Dans l'exemple illustré sur la figure 7, les deux bi-sondes 1, 2 sont disposées d'un premier côté de la paroi 40 : une première mono-sonde 11, 21 de chaque bi-sonde 1, 2 est disposée sur la paroi 40 par l'intermédiaire de l'autre mono-sonde 12, 22 et de la couche 13, 23 intercalée.

L'invention selon son deuxième aspect concerne un procédé 300 d'évaluation de conditions de fonctionnement de l'échangeur de chaleur. Comme détaillé ci-dessous, le procédé 300 repose sur la mise en œuvre d'un système comprenant au moins deux bi-sondes. A l'aide de deux bi-sondes, il est possible en mettant en œuvre le procédé 300 décrit ci-après d'évaluer notamment une condition de fonctionnement, nommément la résistance thermique de convection *R'cv,* dont la valeur est supposée connue selon le procédé 300 au prix d'une hypothèse supplémentaire. La mise en œuvre de deux bi-sondes selon le procédé 300 permet donc de s'affranchir de l'hypothèse supplémentaire qui serait faite dans le cadre de la mise en œuvre d'un système d'évaluation 0 qui comprendrait une unique bi-sonde.

Selon un mode de réalisation non couvert par les revendications annexées et en référence à la figure 11, le procédé 300 d'évaluation de conditions de fonctionnement d'un échangeur de chaleur, met donc en œuvre un système 0 pouvant comprendre une unique bi-sonde. Ci-dessous, cette bi-sonde est supposée être la première bi-sonde 1.

Toutefois, l'on aurait pu équivalemment supposé qu'il s'agisse de la deuxième bi-sonde 2. En référence à la figure 11, le procédé 300 comprend l'étape suivante mise en œuvre en utilisant les dispositifs d'alimentation 10, de mesure 20 et de supervision 30 :

- une étape de détermination 310, en fonction de la résistance thermique $Rs_1$ de la première bi-sonde 1 et de la résistance thermique *Rp* de la paroi 40, des conditions de fonctionnement suivantes :

  o la température $Tf_1$ du fluide *f* du premier côté de la paroi 40,
  o la température $Tf'_1$ du fluide *f'* du second côté de la paroi 40 et
  o la résistance thermique $R'_1$ du second côté de la paroi 40,

    à la première hauteur $h_1$ de circulation,
    et le cas échéant :

  o la résistance thermique $R_1$ du premier côté de la paroi 40 à la première hauteur $h_1$ de circulation.

Introduisons les notations suivantes utilisées par la suite : la température *Ti(tj),* avec *i* = 11, 12, 21 ou 22 et *j* = 1 ou 2, est la température de la mono-sonde *i* déterminée à compter de l'instant *tj.* Les calculs 130, 160, 135 et 165 de chaque température *Ti(tj)* peut impliquer le calcul intermédiaire de chaque résistance électrique *Ri(tj)* correspondante selon la loi d'évolution ad hoc évoquée plus haut, où *Ri(tj),* où *i* = 11, 12, 21 ou 22 et *j* = 1 ou 2, est la résistance électrique de la mono-sonde *i* déterminée à compter de l'instant *tj.*

Selon un mode de réalisation du procédé selon l'invention et en référence à la figure 9, l'étape de détermination 310 comprend les sous-étapes 110 à 170 décrites ci-dessous, réalisées à l'aide de la première bi-sonde 1. Ces sous-étapes sont de préférence coordonnées par le dispositif de supervision 30.

Ces sous-étapes 110 à 170 comprennent une première série des sous-étapes 110 à 130 suivantes :

- alimenter 110 les mono-sondes 11, 12, et plus particulièrement les circuits résistifs 111, 121, de la première bi-sonde 1 avec des courants électriques d'intensités différentes,
- mesurer 120 la tension aux bornes de chacune des mono-sondes 11, 12, et plus particulièrement dans chacun des circuits résistifs 111, 121, et éventuellement le courant électrique dans chacune des mono-sondes 11, 12, et plus particulièrement dans chacun des circuits résistifs 111, 121, puis
- calculer 130 la température *T11(t1), T12(t1)* de chaque mono-sonde 11, 12, en fonction de la mesure de tension correspondante, et éventuellement en fonction de la mesure de courant correspondante.

Cette première série de sous-étapes 110, 120 et 130 est réalisée à compter d'un premier instant *t1,* puis une deuxième série de sous-étapes correspondantes 140, 150 et 160 est réalisée à compter d'un deuxième instant *t2.* Cette deuxième série de sous-étapes 140, 150 et 160 permet de calculer 160 les températures *T11(t2), T12(t2)* des mono-sondes 11, 12 de la première bi-sonde 1 en fonction de la mesure de tension correspondante, et éventuellement en fonction de la mesure de courant correspondante. La deuxième série de sous-étapes 140, 150 et 160 n'est réalisée qu'une fois la première série de sous-étapes 110, 120 et 130 achevées, ou du moins qu'une fois les mesures 120 achevées.

Selon un mode de réalisation de l'invention, le procédé 300 d'évaluation de conditions de fonctionnement d'un échangeur de chaleur, met en œuvre un système 0 tel qu'illustré sur la figure 6, comprenant deux bi-sondes 1, 2. En référence à la figure 12, le procédé 300 comprend l'étape suivante mise en œuvre en utilisant les dispositifs d'alimentation 10, de mesure 20 et de supervision 30 :

- une étape de détermination 320, en fonction des résistances thermiques $Rs_1$ et $Rs_2$ des première et deuxième bi-sondes 1, 2 et de la résistance thermique *Rp* de la paroi 40, des conditions de fonctionnement suivantes :

  o la température $Tf_1$ du fluide *f* du premier côté de la paroi 40 et la température $Tf'_1$ du fluide *f'* du second côté de la paroi 40, à la première hauteur $h_1$ de circulation, et
  o la température $Tf_2$ du fluide *f* du premier côté de la paroi 40 et la température $Tf'_2$ du fluide *f'* du second côté de la paroi 40, et
  o la résistance thermique $R_1$ du premier côté de la paroi 40 et la résistance thermique $R'_1$ du second côté de la paroi 40, à la première hauteur $h_1$ de circulation.

Toujours en référence à la figure 12, l'étape de détermination 320 peut plus particulièrement comprendre :

- une première étape de détermination 321, à l'aide de la première bi-sonde 1 et en fonction de la résistance thermique

$Rs_1$ de la première bi-sonde 1 et de la résistance thermique Rp de la paroi 40, des conditions de fonctionnement suivantes :

◦ la température $Tf_1$ du fluide *f* du premier côté de la paroi 40,
◦ la température $Tf'_1$ du fluide *f'* du second côté de la paroi 40,
◦ la résistance thermique $R_1$ du premier côté de la paroi 40 et
◦ la résistance thermique $R'_1$ du second côté de la paroi 40, à la première hauteur $h_1$ de circulation, et

- une deuxième étape de détermination 322, à l'aide de la deuxième bi-sonde 2 et en fonction de la résistance thermique $Rs_2$ de la deuxième bi-sonde 2 et de la résistance thermique *Rp* de la paroi 40, des conditions de fonctionnement suivantes :

◦ la température $Tf_2$ du fluide *f* du premier côté de la paroi 40,
◦ la température $Tf'_2$ du fluide *f'* du second côté de la paroi 40.

Selon un mode de réalisation du procédé selon l'invention et en référence à la figure 10, l'une au moins des première et deuxième étapes de détermination 321, 322 comprend les sous-étapes 115 à 185 décrites ci-dessous, réalisées à l'aide de l'une respective parmi les première et deuxième bi-sondes 1, 2. Ces sous-étapes 115 à 185 sont de préférence coordonnées par le dispositif de supervision 30.

Ces sous-étapes 115 à 185 comprennent une première série des sous-étapes 115 à 135 suivantes :

- alimenter 115 les mono-sondes 11, 12, 21, 22, et plus particulièrement les circuits résistifs 111, 121, 211, 221, de l'une respective parmi les première et deuxième bi-sondes 1,2 avec des courants électriques d'intensités différentes,
- mesurer 125 la tension aux bornes de chacune des mono-sondes 11, 12, 21, 22, et plus particulièrement dans chacun des circuits résistifs 111, 121, 211, 221, et éventuellement le courant électrique dans chacune des mono-sondes 11, 12, 21, 22, et plus particulièrement dans chacun des circuits résistifs 111, 121, 211, 221, puis
- calculer 135 la température *T11(t1), T12(t1), T21(t1), T22(t1)* de chaque mono-sonde 11, 12, 21, 22 en fonction de la mesure de tension correspondante, et éventuellement en fonction de la mesure de courant correspondante.

Cette première série de sous-étapes 115, 125 et 135 est réalisée à compter d'un premier instant *t1,* puis une deuxième série de sous-étapes correspondantes 145, 155 et 165 est réalisée à compter d'un deuxième instant *t2.* Cette deuxième série de sous-étapes 145, 155 et 165 permet de calculer 165 la température *T11(t2), T12(t2), T21(t2), T22(t2)* de chaque mono-sonde 11, 12, 21, 22 en fonction de la mesure de tension correspondante, et éventuellement en fonction de la mesure de courant correspondante. La deuxième série de sous-étapes 145, 155 et 165 n'est réalisée qu'une fois la première série de sous-étapes 115, 125 et 135 achevées, ou du moins qu'une fois les mesures 125 achevées.

Toujours en référence à la figure 10, la première étape de détermination 321 du procédé 300 selon son mode de réalisation illustré sur la figure 12 comprend alors en outre la sous-étape suivante :

- calculer 175, en fonction de la résistance thermique $Rs_1$ de la première bi-sonde 1, de la résistance thermique *Rp* de la paroi 40 et des températures *T11(t1), T12(t1), T11(t2) et T12(t2)* des mono-sondes 11, 12, les conditions de fonctionnement suivantes :

o la température $Tf_1$ du fluide *f* du premier côté de la paroi 40,
o la température $Tf'_1$ du fluide *f'* du second côté de la paroi 40,
◦ la résistance thermique $R_1$ du premier côté de la paroi 40, et
◦ la résistance thermique $R'_1$ du second côté de la paroi 40,

à la première hauteur $h_1$ de circulation.

La deuxième étape de détermination 322 du procédé 300 selon son mode de réalisation illustré sur la figure 12 comprend alors en outre la sous-étape suivante :

- calculer 185, en fonction de la résistance thermique $Rs_2$ de la deuxième bi-sonde 2, de la résistance thermique *Rp* de la paroi 40 et des températures *T21(t1), T22(t1), T21(t2) et T22(t2)* des mono-sondes 21, 22, les conditions de fonctionnement suivantes :

o la température $Tf_2$ du fluide *f* du premier côté de la paroi 40,
o la température $Tf'_2$ du fluide *f'* du second côté de la paroi 40, et la cas échéant

o la résistance thermique $R_2$ du premier côté de la paroi 40 et
o la résistance thermique $R'_2$ du second côté de la paroi 40,

à la deuxième hauteur $h_2$ de circulation.

Un mode de réalisation particulier de l'invention est décrit ci-après en référence aux figures 8 à 10. Cette description permet d'expliciter en détails les calculs 170 et 175 introduits plus haut. La description détaillée du calcul 185 introduit plus haut n'est pas donnée ici, mais la description détaillée du calcul 175 peut aisément être modifiée pour l'obtenir.

En référence aux figures 8 à 10, la description détaillée du calcul 170 et du calcul 175 est plus particulièrement donnée ci-après dans un contexte selon lequel le courant électrique alimentant 110, 140 et 115, 145 le circuit résistif 111 de la première mono-sonde 11 de la première bi-sonde 1 consiste en une alimentation en intensité et est paramétré de sorte à induire une évolution de température nulle de la première mono-sonde 11. Une telle puissance électrique est fournie au circuit résistif 111 pour y induire une différence de tension et pouvoir remonter à ses températures *T11(t1)* et *T11(t2)* par la loi d'ohm et la loi d'évolution *ad hoc.* L'on peut également considérer que la température *T11* de la première mono-sonde 11 de la première bi-sonde 1 n'évolue pas sur la période d'acquisition des températures *T11(t1)* et *T11(t2),* ce qui permet de considérer que *T11(t2) = T11(t1)* et donc de se limiter au calcul d'une seule des températures *T11(t1)* et *T11(t2).* Il convient donc de considérer que l'une ou l'autre des étapes parmi les couples d'étapes d'alimentation (110, 140) et (115, 145), du circuit résistif 111 peut comprendre l'application d'un courant d'alimentation d'intensité nulle à compter de l'un ou l'autre parmi le premier instant *t1* et le deuxième instant *t2.* Il convient également de considérer que l'une des étapes parmi les couples d'étapes de mesure de tension (120, 150) et (125, 155) aux bornes du circuit résistif 111 peut consister à reprendre le résultat de l'autre correspondante des étapes de mesure de tension (150, 120) et (155, 125) aux bornes du circuit résistif 111.

Dans ce contexte, lorsque la deuxième mono-sonde 12 de la première bi-sonde 1, dissipe de l'énergie thermique, une élévation de sa température *T12* permet d'établir un équilibre thermique avec son environnement. La différence de température $\Delta T$ entre la température initiale de la deuxième mono-sonde 12 sans dissipation de puissance et la température d'équilibre *T12(t1)* ou *T12(t2)* avec dissipation de puissance est fonction de l'énergie dissipée et des résistances thermiques de l'environnement. Notamment, si un encrassement 50 et/ou 50' ajoute une résistance thermique Re et/ou *R'e* dans l'environnement de la première bi-sonde 1, il est possible de la détecter par la modification induite sur la différence de température $\Delta T$.

A compter du premier instant *t1,* on dépose 110, 115 une puissance *P12(t1)* dans la deuxième mono-sonde 12 de la première bi-sonde 1. De préférence à l'atteinte du régime thermique stationnaire de l'évolution en température de la deuxième mono-sonde 12, on en calcule 130, 135 la température *T12(t1).*

Puis, à compter du deuxième instant t2, on dépose 140, 145 une puissance *P12(t2)* dans la deuxième mono-sonde 12. De préférence à l'atteinte du régime thermique stationnaire de l'évolution en température de la deuxième mono-sonde 12, on en calcule 160, 165 la température *T12(t2).*

La puissance *P12(t2)* n'est pas nécessairement différente de la puissance *P12(t1).* Les puissances *P12(t1)* et *P12(t2)* ne sont simplement pas appliquées simultanément, mais alternativement. Toutefois, la puissance *P12(t2)* est de préférence différente de la puissance *P12(t1)* ; cela permet de bénéficier pleinement de la robustesse de l'approche analytique sur laquelle repose l'invention et de fiabiliser encore les calculs en s'affranchissant d'une éventuelle imprécision de mesure 120, 150 et 125, 155 suite à l'application 110, 140 et 115, 145 de l'une ou l'autre des puissances *P12(t1)* et *P12(t2).* En outre, les puissances *P12(t1)* et *P12(t2)* sont de préférence appliquées 110, 140 et 115, 145 de façon suffisamment proche l'une de l'autre dans le temps, soit par exemple à quelques dizaines de secondes d'intervalle, par exemple avec un intervalle inférieur à 60 secondes, plus particulièrement inférieur à 30 secondes et de préférence égal à 10 secondes, pour pouvoir négliger une variation des résistances thermiques *R* et *R'* de chaque côté de la paroi 40. Une limite inférieure de l'intervalle de temps entre les applications successives des puissances *P12(t1)* et *P12(t2)* peut être le temps nécessaire pour atteindre le régime stationnaire de l'évolution en température de chaque circuit résistif 111, 121 ; ce temps étant généralement inférieur à 10 secondes, et par exemple compris entre 2 et 8 secondes.

Les puissances *P12(t1)* et *P12(t2)* sont typiquement comprises entre 1 et 10 W. Elles sont choisies suffisamment faibles pour ne pas remettre en cause l'équilibre thermique général de l'échangeur thermique, et notamment pour ne pas altérer les températures $Tf_1$ et $Tf_1'$ des fluides *f* et *f'* à la première hauteur $h_1$ de circulation. L'on peut s'en assurer en paramétrant l'alimentation 110, 140 et 115, 145 de sorte que la puissance dissipée par la première bi-sonde 1 soit de l'ordre de 0,02 % de la puissance thermique échangée à travers la paroi 40 de l'échangeur de chaleur.

La question du niveau de puissance à déposer 110, 140 et 115, 145 dans la deuxième mono-sonde 12 de la première bi-sonde 1 a fait l'objet de développements analytiques spécifiques non présentés ici. Cependant, elle peut être traitée de la manière suivante. Les contraintes antagonistes qui s'appliquent sont :

- d'une part la nécessité de ne pas déposer une puissance trop forte qui perturberait le fonctionnement de l'échangeur de chaleur (et notamment modifierait les températures $Tf_1$ et $Tf'_1$ de fluides *f* et *f'* à la première hauteur $h_1$ de circulation),

- d'autre part la nécessité de déposer une puissance suffisante pour se traduire dans les faits par une modification suffisante de la température *T12* de la deuxième mono-sonde 12 de la première bi-sonde 1 pour générer un flux thermique $\Phi_{12} = \Phi_{12,s} + \Phi_{12,b}$ (Cf. figure 8) suffisant pour que l'interprétation des mesures de tension 120, 150 et 125, 155 soit précise.

On peut alors calculer à l'aide de bilans thermiques simples au moins un paramètre parmi :

- un couple de paramètres comprenant la température $Tf_1$ du fluide *f et* la résistance thermique *R,* ou plus particulièrement la résistance thermique $R_1$ à la première hauteur $h_1$ de circulation, d'un côté de la paroi 40, et
- un couple de paramètres comprenant la température $Tf'_1$ du fluide *f'* et la résistance thermique *R',* ou plus particulièrement la résistance thermique $R'_1$ à la première hauteur $h_1$ de circulation, de l'autre côté de la paroi 40.

La figure 8 illustre le schéma de principe et la signification des notations employées ci-dessous. On notera que, pour les descriptions données ici, les températures sont données comme températures moyennes de la couche de matériau à laquelle elles se rattachent et que les flux thermiques sont donnés au travers d'interface entre ces couches.

La résistance thermique $R_{s1}$ (en $m^2 \cdot K \cdot W^{-1}$) de la première bi-sonde 1 et/ou l'épaisseur e (en mètre) et la conductivité thermique $\lambda$ (en $W \cdot m^{-1} \cdot K^{-1}$) de la première bi-sonde 1 sont connues. De ces paramètres dépend le flux thermique $\Phi_{12,s}$ (en $W/m^2$) traversant l'interface entre les mono-sondes 11 et 12, à compter de chaque instant *t1* et *t2 :*

$$\Phi_{12,s}(\text{t1}) = -\frac{1}{R_{s1}}\big(T11(t1) - T12(t1)\big) = -\frac{\lambda}{e}(T11(t1) - T12(t1))$$

, et

$$\Phi_{12,s}(\text{t2}) = -\frac{1}{R_{s1}}\big(T11(t2) - T12(t2)\big) = -\frac{\lambda}{e}(T11(t2) - T12(t2)).$$

On peut également écrire l'expression du flux thermique $\Phi_{12,b}$ (en $W/m^2$) traversant l'interface entre la deuxième mono-sonde 12 de la première bi-sonde 1 et la paroi 40, à compter de chaque instant *t1* et *t2 :*

$$\Phi_{12,b}(t1) = S \cdot P12(t1) - \Phi_{12,s}(t1) = \frac{T12(t1) - Tf'_1}{R_p + R_s + R'} = c(t1)$$

et

$$\Phi_{12,b}(t2) = S \cdot P12(t2) - \Phi_{12,s}(t2) = \frac{T12(t2) - Tf'_1}{R_p + R_s + R'} = c(t2)$$

, où S est la surface de la sonde (en $m^2$), $Tf'_1$ (en K) est la température du fluide circulant du second côté de la paroi 40 à la première hauteur $h_1$ de circulation, $R_p$ est la résistance de la paroi 40, et *R'* est la résistance thermique du second côté de la paroi 40 (qui peut le cas échéant être remplacée par $R'_1$, la résistance thermique du second côté de la paroi 40 à la première hauteur $h_1$ de circulation).

Ainsi, on en déduit :

$$Tf'_1 = \frac{c(t2)T12(t1) - c(t1)T12(t2)}{c(t2) - c(t1)}$$

et

$$R' = \frac{T12(t1)}{c(t1)} - R_p - R_{s1} - \frac{c(t2)T12(t1) - c(t1)T12(t2)}{c(t1)(c(t2) - c(t1))} \text{ (ou } R'_1\text{)}.$$

De la même manière, connaissant les relations suivantes :

$$\Phi_{12,s}(t1) = \frac{T11(t1) - Tf_1}{R_{s1} + R}$$

, et

$$\Phi_{12,s}(t2) = \frac{T11(t2) - Tf_1}{R_{s1} + R},$$

on en déduit $Tf_1$, la température du fluide *f* circulant du premier côté de la paroi 40 à la première hauteur $h_1$ de circulation, et *R,* la résistance thermique du premier côté de la paroi 40 (ou $R_1$, la résistance thermique du premier côté de la paroi 40 à la première hauteur $h_1$ de circulation).

Dès lors, il est possible calculer le flux thermique $\Phi_1$ (en W/m$^2$) traversant la paroi 40 à la première hauteur $h_1$ de circulation : $\Phi_1 = \frac{Tf_1 - Tf'_1}{R + R_p + R'}$.

Le flux thermique $\Phi_1$ (en W/m$^2$) traversant la paroi 40 à la première hauteur $h_1$ de circulation peut également être connu via une mesure à puissance déposée *P12* nulle. En effet, si *P12* est nulle, le flux thermique $\Phi_1$ est égal au flux $\Phi_{12,b}$, soit $\frac{1}{R_{s1}}\left(T11(t1) - T12(t1)\right)$.

Ainsi, les mesures 120, 150 et 125, 155 successives avec la première bi-sonde 1 permettent d'obtenir les températures *Tf,* et $Tf'_1$ des fluides *f* et *f'*, les résistances thermiques *R* et *R'* (ou $R_1$ et $R'_1$) de chaque côté de la paroi 40, ainsi que le flux thermique $\Phi_1$ traversant la paroi 40, à la première hauteur $h_1$ de circulation.

Du fait que chacune des résistances thermiques *R* et *R'* calculées est proportionnelle à une somme de résistances thermiques de convection et éventuellement d'encrassement : *R = Rcv+Re* et *R' = R'cv+R'e,* chacun des premier et deuxième procédés 300 permet de discriminer de quel(s) côté(s) de la paroi 40 un encrassement s'est déposé, par exemple depuis une évaluation nominale ou antérieure des conditions de fonctionnement de l'échangeur de chaleur.

Les hypothèses faites ci-dessus permettant d'aboutir à ces résultats consistent à supposer que :

- *P12(t1)* et *P12(t2)* ne modifient pas les températures $Tf_1$ et $Tf_1$, et que
- *P12(t1)* et *P12(t2)* sont appliquées 110, 140 et 115, 145 successivement, mais de façon suffisamment proche dans le temps, pour pouvoir négliger la variation des résistances thermiques d'encrassement *Re* et *R'e* et l'éventuelle variation des résistances thermiques de convection *Rcv* ou *R'cv.*

Selon le procédé 300 et en référence à la figure 11, on fait l'hypothèse supplémentaire de la connaissance *a priori* de la valeur de la résistance thermique de convection *R'cv,* voire des valeurs des résistances thermiques de convection *Rcv* et *R'cv,* par exemple en supposant qu'elles sont identiques à celles correspondant à des conditions de fonctionnement nominales de l'échangeur de chaleur, on peut déduire, des résistances thermiques *R* et *R'* calculées, les résistances d'encrassement *Re* et *R'e* de chaque côté de la paroi 40.

Cette hypothèse supplémentaire est effectivement nécessaire si seules les conditions de fonctionnement issues de la mise en œuvre de la seule première bi-sonde 1 sont utilisées. Toutefois, comme annoncé plus haut et décrit ci-après, le procédé 300 selon l'invention prévoit de déterminer, indépendamment de toute hypothèse supplémentaire, des valeurs des résistances thermiques de convection *Rcv* et *R'cv,* et donc d'en déduire des valeurs des résistances d'encrassement *Re* et *R'e* de chaque côté de la paroi 40, en utilisant deux bi-sondes 1, 2 disposées à des hauteurs *h1* et *h2* de circulation des fluides *f* et *f'* différentes entre elles.

Notons ici que, connaissant la nature des encrassements 50, 50' susceptibles de se former de chaque côté de la paroi 40, et donc leurs conductivités thermiques, il est possible d'évaluer les épaisseurs des encrassements, en fonction des résistances d'encrassement *Re* et *R'e* de chaque côté de la paroi 40. Ainsi, le procédé 300 peut en outre comprendre l'étape suivante : calculer l'une parmi les épaisseurs des encrassements 50, 50', en fonction de l'une respective parmi les résistances d'encrassement *Re* et *R'e* de chaque côté de la paroi 40 et de l'une respective parmi les conductivités thermiques des encrassements de chaque côté de la paroi 40.

Selon un mode de l'invention et en référence à la figure 12, le procédé 300 d'évaluation de conditions de fonctionnement de l'échangeur de chaleur, comprend, après l'étape de détermination 320, une étape de calcul 330 par exemple mise en œuvre par le dispositif de supervision 30. L'étape de calcul 330 comprend le calcul, en fonction des conditions de fonctionnement précédemment déterminées 320, de paramètres géométriques de l'échangeur thermique et des propriétés physiques de l'un des fluides *f* et *f',* d'autres conditions de fonctionnement de l'échangeur de chaleur.

Lorsque les propriétés physiques du fluide *f,* et notamment sa chaleur spécifique, sont connues, les conditions de fonctionnement calculées 330 peuvent comprendre un débit massique *Qm* du fluide *f,* une résistance de convection *Rcv* et une résistance d'encrassement *Re* du premier côté de la paroi 40.

Lorsque les propriétés physiques du fluide *f'*, et notamment sa chaleur spécifique, sont connues, les conditions de fonctionnement calculées 330 peuvent comprendre un débit massique *Q'm* du fluide *f'*, une résistance de convection *R'cv* et une résistance d'encrassement *R'e* du second côté de la paroi 40.

L'étape de calcul 330 est décrite en détails ci-dessous avec des notations dont le sens physique est illustré sur la figure 8. Le calcul 330 est plus particulièrement détaillé ci-dessous dans un contexte particulier choisi pour raison de simplicité, mais le calcul 330 est évidemment adaptable à d'autres contextes, voire généralisable à toute sorte de contextes potentiellement rencontrés, et notamment à toute sorte de géométries de l'échangeur thermique.

Selon le contexte adopté ici afin de détailler le calcul 330, les fluides circulent de part et d'autre de la paroi 40 à contre-courant et la paroi de l'échangeur de chaleur sur laquelle les deux bi-sondes 1, 2 sont disposées est plane. Ce contexte correspond aux illustrations offertes par les figures 7 et 8.

D'un point de vu infinitésimal, l'échange d'énergie stationnaire $d\emptyset(x)$ entre les fluides *f* et *f'* sur un intervalle de longueur *dx* (orienté selon l'axe *x* illustré sur les figures 6 et 8) et une largeur constante *L* (orientée selon l'axe *z* illustré sur la figure 8) s'écrit :

$$d\emptyset(x) = U(x) \cdot L \cdot \left(Tf(x) - Tf'(x)\right)dx,$$

où $U(x)$ est un coefficient de transfert global (en $W \cdot m^{-2} \cdot K^{-1}$), défini de façon générale par une équation prenant la forme suivante :

$$\frac{1}{U(x)} = R_e(x) + R_{cv}(x) + R_p(x) + R'_e(x) + R'_{cv}(\mathrm{x}).$$

De façon non limitative, l'on peut supposer que la résistance de la paroi *Rp* ne varie pas en fonction de la hauteur de circulation des fluides, du moins entre les hauteurs de circulation $h_1$ et $h_2$.

La puissance totale échangée entre les fluides *f* et *f'* entre les hauteurs de circulation $h_1$ et $h_2$ s'écrit : $P = \int_{x=h_1}^{x=h_2} d\emptyset(x)\,dx$.

Plusieurs cas de figures se présentent suivant les hypothèses simplificatrices pouvant s'appliquer au calcul de $U(x)$.

En constatant, ou en faisant l'hypothèse, que $U(x)$ est continue et en admettant que $(Tf(x) - Tf'(x))$ est de signe constant entre les hauteurs de circulation $h_1$ et $h_2$, on obtient :

$$P = U(h_m) \cdot \int_{x=h_1}^{x=h_2} L \cdot \left(Tf(x) - Tf'(x)\right) dx$$

où $h_m \in \{h_1, h_2\}$. L'intérêt de cette expression est qu'elle donne à $U(h_m)$ une signification de coefficient de transfert moyen $\overline{U}$.

Cette expression de la puissance totale échangée entre les fluides *f* et *f'* entre les hauteurs de circulation $h_1$ et $h_2$ en fonction du coefficient de transfert $\overline{U}$ est celle que l'on trouve dans les développements liés à l'établissement de la méthode de la différence des températures logarithmiques (ou méthode LMTD pour « logarithmic mean temperature difference » selon la terminologie anglo-saxonne). Appliquer cette méthode amène ici à écrire :

$$P = U(h_m) \cdot S \cdot \Delta T_{ml}$$

, avec

$$S = L \cdot (h_2 - h_1).$$

*S* (en $m^2$) est la surface d'échange et $\Delta T_{ml}$ est la moyenne logarithmique des températures entre les hauteurs de circulation $h_1$ et $h_2$. Elle est fonction de $Tf_1$, $Tf'_1$, $Tf_2$ et $Tf'_2$ et de la configuration de l'écoulement (contre-courant, co-courant,...).

Plusieurs cas peuvent se présenter suivant les simplifications que l'on adopte, et dont le choix dépend du jugement de l'homme du métier.

Cas 1 - Si l'on admet que la somme des résistances $R_e(x) + R_{cv}(x) + R_p(x) + R'_e(x) + R'_{cv}(x)$ est invariante, alors *U*

($h_m$) est donné par une évaluation des résistances thermiques *R* et *R'* à une hauteur de circulation quelconque. Par exemple, l'évaluation est celle réalisée par mise en œuvre de la première bi-sonde 1 à la première hauteur $h_1$. Alternativement, l'évaluation est celle réalisée par mise en œuvre de la deuxième bi-sonde 2 à la deuxième hauteur $h_2$. Toute autre bi-sonde disposée de façon *ad hoc* pourrait également servir à cette évaluation.

Cas 2 - Si on admet que la somme des résistances $R_e(x) + R_{cv}(x) + R_p(x) + R'_e(x) + R'_{cv}(x)$ varie faiblement entre les hauteurs de circulation $h_1$ et $h_2$, alors $U(h_m)$ peut correspondre à une évaluation moyenne qui peut être approchée, par exemple via l'inverse de la somme des résistances moyennes entre les hauteurs de circulation $h_1$ et $h_2$. Dans ce cas, il peut être utile d'introduire les moyennes suivantes : $\overline{R_e + R_{cv}} = \frac{[(R_e+R_{cv})(h_1)+(R_e+R_{cv})(h_2)]}{2} = \frac{R_1+R_2}{2}$ et $\overline{R'_e + R'_{cv}} = \frac{[(R'_e+R'_{cv})(h_1)+(R'_e+R'_{cv})(h_2)]}{2} = \frac{R'_1+R'_2}{2}$.

Cas 3 - En n'admettant aucune de ces simplifications, on peut approcher, en première approximation, la variation de $R_e(x) + R_{cv}(x) + R_p(x) + R'_e(x) + R'_c(x)$ comme linéaire et intégrer $\int_{x=h_1}^{x=h_2} d\emptyset(x)\, dx$ en conséquence, ce qui amène à une expression qui permet toujours l'expression explicite de la puissance *P* échangée en fonction des résistances et des températures aux hauteurs de circulation $h_1$ et $h_2$, soit $P = fct\,((R_e + R_{cv})(h_1)\,, (R'_e + R'_{cv})(h_1)\,, (R_e + R_{cv})(h_2), (R'_e + R'_{cv})(h_2), Tf_1, Tf_2. Tf'_1, Tf'_2)$.

Considérons les cas 1 et 2 ci-dessus, qui conduisent à l'expression : $P = U(h_m) \cdot S \cdot \Delta T_{ml}$. Les termes *Re + Rcv, R'e + R'cv et Rp* sont connus aux hauteurs de circulation $h_1$ et $h_2$ à partir des mesures et des calculs 115 à 185 effectués par mise en œuvre des bi-sondes 1, 2, indépendamment l'une de l'autre, et de la résistance thermique *Rp* de la paroi. Les moyennes telles qu'introduites ci-dessus conduisant à l'estimation $U(h_m)$ du coefficient de transfert $\overline{U}$ sont donc connues. De la même manière, $\Delta T_{ml}$, est connue à partir des calculs 135, 165. *S* est une donnée géométrique de la surface d'échange considérée ; elle est supposée connue en tant que paramètre géométrique de l'échangeur thermique. On peut donc en déduire une valeur de la puissance échangée *P.*

Or cette puissance s'écrit également :

$$P = Qm \cdot Cp \cdot (Tf_1 - Tf_2) = Q'm \cdot Cp' \cdot (Tf'_1 - Tf'_2),$$

où *Qm* et *Q'm* sont les débits massiques respectifs de chaque fluide (en $kg \cdot s^{-1}$), *Cp* et *Cp'* sont leurs chaleurs spécifiques respectives (en $J \cdot kg^{-1} \cdot K^{-1}$).

Comme la puissance échangée *P* est connue, on peut déduire de ces deux expressions les débits massiques *Qm* et *Q'm* propres à chaque fluide.

Les résistances de convection, *Rcv* et *R'cv,* dépendent des débits massiques Qm et $Q'_m$ et peuvent donc être évaluées à leur tour.

Plus particulièrement, la résistance de convection *Rcv* est de la forme :

$$R_{cv} = \left(\frac{\lambda_f}{d} \cdot a \cdot Re^b \cdot Pr^c\right)^{-1}$$

où $\lambda_f$ est la conductivité thermique du fluide *f* (en $W \cdot m^{-1} \cdot K^{-1}$), *d* le diamètre hydraulique (en mètre), *a, b et c* des paramètres connus qui dépendent de la géométrie de l'échangeur de chaleur et *Pr* le nombre de Prandtl qui dépend de la chaleur spécifique du fluide *f,* de sa conductivité thermique et de sa viscosité cinématique. L'ensemble de ces grandeurs peuvent être supposées connues, y compris en fonction des conditions, notamment de température et de pression, auxquelles le fluide *f* peut être soumis.

Par ailleurs, le nombre de Reynolds s'écrit :

$$Re = \frac{\rho \cdot u \cdot d}{\mu}$$

où $\rho$ et $\mu$ sont respectivement la masse volumique (en $kg \cdot m^{-3}$) et la viscosité cinématique ($Pa \cdot s$) du fluide *f*, *u* est sa vitesse directement reliée au débit massique *Qm.*

On procède par analogie pour calculer 330 la résistance de convection *R'cv.*

A partir de là, connaissant les termes *R = Re + Rcv* et *R' = R'e + R'cv* (ou au sens des moyennes $\overline{R_e + R_{cv}}$ et $\overline{R'_e + R'_{cv}}$), on peut en déduire, toujours sur l'intervalle entre les hauteurs de circulation *h1* et *h2,* les résistances thermiques d'encrassement *Re* et *R'e* (ou au sens des moyennes $\overline{R_e}$ et $\overline{R'_e}$) de part et d'autre de la paroi 40.

Un raisonnement similaire s'applique dans le cas 3.

Ainsi le procédé 300 mettant en œuvre deux bi-sondes 1 et 2, en plus des conditions de fonctionnement que l'on obtient en mettant en œuvre une bi-sonde, à savoir les températures *Tf* et *Tf'* des fluides f et *f'* de part et d'autre de la paroi 40, les résistances thermiques *R* et *R'* de chaque côté de la paroi 40, ainsi que le flux thermique Φ, permet aussi d'obtenir les débits massiques *Qm et Q'm* des fluides *f* et *f'* de part et d'autre de la paroi 40, ainsi que les résistances thermiques d'encrassement *Re* et *R'e* de part et d'autre de la paroi 40, indépendamment de toute hypothèse sur les résistances thermiques de convection *Rcv* et *R'cv* et en particulier sans avoir à faire l'hypothèse selon laquelle les régimes hydrauliques sont stables dans le temps, i.e. que $R_{cv}$ *et* $R'_{cv}$ ne varient pas dans le temps.

Au vu de ce qui précède, on s'aperçoit que la différence entre les hauteurs $h_1$ et $h_2$ auxquelles sont respectivement situées les première et deuxième bi-sondes 1, 2 est de préférence paramétrée de sorte que des différences de températures $Tf_1$-$Tf_2$ du fluide *f* et $Tf'_1$-$Tf'_2$ du fluide *f'* entre les hauteurs $h_1$ et $h_2$ soient perceptibles par le dispositif de mesure 20 comme une différence de mesures 120, 150 de tension entre une mono-sonde 11, 12 de la première bi-sonde 1 et une mono-sonde 21, 22 de la deuxième bi-sonde 2.

L'implémentation du procédé 300 selon le deuxième aspect de l'invention permet de connaître à ce stade les conditions de fonctionnement suivantes de l'échangeur de chaleur :

- la température $Tf_1$ du fluide *f* du premier côté de la paroi 40,
- la température $Tf'_1$ du fluide *f'* du second côté de la paroi 40,
- la résistance thermique $R'_1$ du second côté de la paroi 40, et
- la valeur, nominale ou calculée, de la résistance de convection *R'cv* du second côté de la paroi 40.

En référence aux figures 11 et 12, le procédé 300 selon le deuxième aspect de l'invention comprend alors une étape d'acquisition de mesure 340 de l'évolution du courant électrique dans l'une des mono-sondes 11, 12, 21, 22. Cette étape peut être coordonnée par le dispositif de supervision 30 avec les autres étapes des premier et deuxième procédés 300. Selon le procédé 300, la mesure 340 de l'évolution du courant électrique dans une des mono-sondes 11, 12, 21, 22 peut comprendre l'une parmi la mesure 120 du courant électrique dans l'une des mono-sondes 11, 12 à compter du premier instant *t1* et la mesure 150 du courant électrique dans l'une des mono-sondes 11, 12 à compter du deuxième instant *t2*. Selon le procédé 300, la mesure 340 de l'évolution du courant électrique dans une des mono-sondes 11, 12, 21, 22 peut comprendre l'une parmi :

- la mesure 125 du courant électrique dans au moins l'une des mono-sondes 11, 12, 21, 22 à compter du premier instant *t1* et
- la mesure 155 du courant électrique dans au moins l'une des mono-sondes 11, 12, 21, 22 à compter du deuxième instant *t2.*

Comme annoncé plus haut, les mesures de courant dans l'une des mono-sondes 11, 12, 21, 22 sont par exemple réalisées avec une vitesse d'échantillonnage comprise entre une et dix mesures par seconde.

Avec une telle vitesse d'échantillonnage ou lorsque la mesure 340 est réalisée en continue, l'on peut calculer, de la même façon qu'aux étapes 130, 160 et 135, 165, l'évolution correspondante de la température. La première étape d'évaluation 350 comprend ainsi une conversion de l'évolution du courant électrique telle que mesurée 340 en une évolution de la température de la mono-sonde 11, 12, 21, 22 dans laquelle la mesure 340 a été réalisée. Cette conversion est par exemple réalisée par le dispositif de supervision 30 selon une loi d'évolution propre à la mono-sonde 11, 12, 21, 22 dans laquelle la mesure 340 a été réalisée. On considère par la suite que la mono-sonde 11, 12, 21, 22 dans laquelle la mesure 340 a été réalisée ici de la deuxième mono-sonde 22 de la deuxième bi-sonde 2. Toutefois, ce choix n'est pas limitatif de l'invention ; n'importe quelle autre mono-sonde de température aurait pu être utilisée à cette fin.

En référence aux figures 11 et 12, le procédé 300 selon le deuxième aspect de l'invention comprend alors une première étape d'évaluation 350, en fonction de la résistance de convection *R'cv* du second côté de la paroi 40 et de la mesure 340 d'évolution du courant électrique, d'une valeur d'un produit $M'_e.Cp'_e$ de la masse $M'_e$ par la chaleur spécifique $Cp'_e$ de l'encrassement 50' déposé du second côté de la paroi 40. Cette première étape d'évaluation 350 peut être mise en œuvre par le dispositif de supervision 30.

L'on considère ci-dessous que la mono-sonde 11, 12, 21, 22, dans laquelle l'évolution du courant électrique est mesurée 340, est disposée du premier côté de la paroi 40 et le cas échéant directement contre la paroi 40. Ce choix est adapté aux calculs présentés ci-dessous, pour illustrer un mode de réalisation de la première étape d'évaluation 350 du procédé 300 selon le deuxième aspect de l'invention. Toutefois, ces calculs peuvent être aisément modifiés pour être adaptés à une mesure 340 de l'évolution du courant électrique dans n'importe quelle autre mono-sonde de température, et notamment dans une mono-sonde de température disposée du second côté de la paroi 40, et le cas échéant disposée sur la paroi 40 par l'intermédiaire d'une autre mono-sonde. Il en découle qu'il est possible, en adaptant les calculs ci-dessous, d'évaluer la valeur du produit $M_e.Cp_e$ de la masse $M_e$ par la chaleur spécifique $Cp_e$ de l'encrassement 50 déposé du premier côté de la paroi 40.

En fonction de la résistance de convection *R'cv* du second côté de la paroi 40 et de la mesure 340 d'évolution du courant électrique, l'on peut effectivement évaluer la valeur du produit $M'_e.Cp'_e$ de la masse $M'_e$ par la chaleur spécifique $Cp'_e$ de l'encrassement 50' déposé du second côté de la paroi 40, à l'aide de bilans thermiques instationnaires. Plus particulièrement, il est possible d'écrire un bilan thermique instationnaire sur la mono-sonde 22 de la deuxième bi-sonde 2, un bilan thermique instationnaire sur la paroi 40 de l'échangeur de chaleur, un bilan thermique instationnaire sur l'encrassement 50' du côté de la paroi opposé à celui sur lequel est disposée la mono-sonde 22 de la deuxième bi-sonde 2.

En référence à la figure 8, le bilan thermique instationnaire sur la mono-sonde 22 de la deuxième bi-sonde 2 (indice '22') s'écrit :

$$M_{22} \cdot Cp_{22} \frac{dT_{22}}{dt} = P_{22} - \Phi_{22,s} - \Phi_{22,b},$$

où $M_{22}$ *et* $Cp_{22}$ sont respectivement la masse et la chaleur spécifique de la mono-sonde 22, et $T_{22}$ est la température de la mono-sonde 22.

En référence à la figure 8, le bilan thermique instationnaire sur la paroi 40 (indice 'p') s'écrit : $M_p \cdot Cp_p \frac{dT_p}{dt} = \Phi_{22,b} - \Phi_p$ , où $M_p$ *et* $Cp_p$ sont respectivement la masse et la chaleur spécifique de la paroi 40, et *Tp* est la température de la paroi 40.

Le bilan thermique instationnaire sur l'encrassement 50' (indice 'e') s'écrit :

$$M'_e \cdot Cp'_e \frac{dT'_e}{dt} = \Phi_p - \Phi'_e,$$

où $M'_e$ *et* $Cp'_e$ sont respectivement la masse et la chaleur spécifique de l'encrassement 50' et *T'e* est la température de l'encrassement 50'.

Ces bilans énergétiques instationnaires valent pour la caractérisation de l'encrassement 50' du côté de la paroi opposé à celui sur lequel est disposée la mono-sonde 22.

On obtient ainsi un système de trois équations différentielles.

En aparté, notons que pour caractériser l'encrassement 50 du côté de la paroi sur lequel est disposée la mono-sonde 22 de la bi-sonde 2, on peut écrire le système d'équations différentielles suivant :

$$M_{22} \cdot Cp_{22} \frac{dT_{22}}{dt} = P_{22} - \Phi_{22,s} - \Phi_{22,b} \text{ et } M_e \cdot Cp_e \frac{dT_e}{dt} = \Phi_{2,s} - \Phi_e.$$

En revenant à des considérations sur l'encrassement 50' du côté de la paroi opposé à celui sur lequel est disposée la mono-sonde 22, il apparaît que :

- les quantités $P_{22}$, $\Phi_{22,s}$, $\Phi_{22,b}$ peuvent être calculées en fonction de conditions de fonctionnement déjà déterminées dont les conditions de fonctionnement suivantes : *Tf* (ou $Tf_1$ ou $Tf_2$), *Tf'* (ou $Tf_1$ ou $Tf'_2$), *R* (ou $R_1$ ou $R_2$) et R' (ou $R'_1$ ou $R'_2$) (selon les équations présentées plus haut et selon les approximations éventuellement faites de la façon présentée plus haut),
- les valeurs des produits $M_{22} \cdot Cp_{22}$ et $M_p \cdot Cp_p$ sont déterminées par construction de la deuxième bi-sonde 2, voire de sa seule deuxième mono-sonde 22, et par construction de la paroi 40, respectivement,
- la résolution déterministe du système de trois équations différentielles est possible avec les fermetures suivantes :

  ◦

$$\Phi'_e = \frac{(T'_e - Tf')}{R'_{cv}}$$

, et

  ◦

$$\Phi_p = \frac{(T_p - T'_e)}{\frac{1}{2}R'} = \frac{(T_p - T'_e)}{\frac{1}{2}.(R'_{cv} + R'_e)}.$$

◦ pour une valeur de $M'_e \cdot Cp'_e$ fixée.

Dès lors, une valeur fixée du produit de $M'_e \cdot Cp'$, permet de produire des **solutions** $T_{22}(t)$, $T_p(t)$, $T'_e(t)$.

Fort de ces résultats analytiques, l'évaluation 350 de la valeur du produit $M'_e.Cp'_e$ de la masse $M'_e$ par la chaleur spécifique $Cp'_e$ de l'encrassement 50' déposé du second côté de la paroi 40 peut comprendre ensuite la démarche suivante présentant deux phases.

La première phase comprend la définition d'un ensemble d'évolutions de température calculé pour un ensemble de valeurs transitoires $\{M'_e.Cp'_e(i)\}$ prédéterminées dans un intervalle de valeurs [$M'_e.Cp'_e(min)$, $M'_e.Cp'_e(max)$] prédéterminé. L'ensemble de valeurs transitoires $\{M'_e.Cp'_e(i)\}$ peut éventuellement être défini de façon prédéterminée en définissant une gamme de valeurs des masses *M'e* et une gamme de valeurs des capacités calorifiques $Cp'_e$ couvrant a priori le phénomène investigué, pour en déduire un certain nombre de valeurs discrètes $M'_{e,j}$ et $Cp'_{e,k}$ permettant une couverture suffisamment précise des plages considérées. Ces deux gammes de valeurs conduisent à l'ensemble des valeurs transitoires $\{M'_e.Cp'_e(i)\}$ couvrant a priori le phénomène investigué. On calcule alors l'ensemble des solutions transitoires $T_{22}(t)$ (en K) à valeurs transitoires de $M'_e.Cp'_e(i)$ bloquées, que l'on désigne par $T_{22}(t)|_{M'e.Cp'e(i)}$. Un tel ensemble d'évolutions de température est illustré sur les figures 13 et 14. Plus particulièrement, la courbe située au-dessus de toutes les autres courbes de l'ensemble correspond à celle obtenue pour la valeur transitoire minimale de l'ensemble des valeurs transitoires $\{M'_e.Cp'_e(i)\}$ ; la courbe située en-dessous de toutes les autres courbes de l'ensemble correspond à celle obtenue pour la valeur transitoire maximale de l'ensemble des valeurs transitoires $\{M'_e.Cp'_e(i)\}$.

Ces diverses solutions transitoires peuvent être soit réévaluées en fonction des conditions de fonctionnement évaluées avant l'étape d'évaluation 350, soit calculées et stockées, par exemple sur un support de mémorisation du dispositif de supervision 30.

La deuxième phase peut comprendre alors un calcul d'écart entre l'évolution de la température de la mono-sonde 22 telle que mesurée 340 et chacune parmi l'ensemble d'évolutions de température calculées lors de la première phase. Autrement dit, la deuxième peut comprendre le calcul d'erreurs entre chaque solution de transitoire $T_{22}(t)|_{M'e.Cp'e(i)}$ et $T_{22}(t)$. De préférence, ce calcul d'erreur peut être limité à une durée utile $t_u$. A titre illustratif, la durée utile $t_u$ peut être limitée à la zone notée *RI* sur les figures 13 et 14, et plus particulièrement à l'évolution en régime instationnaire de la température $T_{22}(t)$. Une mesure de l'erreur peut alors s'écrire (parmi d'autres possibilités non détaillées ici, mais connues en tant que telles) :

$$\varepsilon(M'_e.Cp'_e(i)) = \int_0^{t_u} \| T_{22}(t) - T_{22}(t)|_{M'_e.Cp'_e(i)} \| \, dt.$$

L'on peut dès lors représenté les écarts σ(T22) obtenus sur un graphe dont l'abscisse court sur l'intervalle de valeurs [$M'_e.Cp'_e(min)$, $M'_e.Cp'_e(max)$], comme illustré sur la figure 15. A l'écart minimal correspond la valeur discrète de $M'_{e,i} \cdot Cp'_{e,j}$ la plus proche de la valeur recherchée du produit $M'_e.Cp'_e$ de la masse $M'_e$ par la chaleur spécifique $Cp'_e$ de l'encrassement 50' déposé du second côté de la paroi 40. Il est encore possible d'ajuster l'évolution des écarts par une fonction par exemple polynomiale et considérer que la valeur recherchée du produit $M'_e.Cp'_e$ est donnée par celle correspond à la valeur minimal de la fonction sur l'intervalle de valeurs considéré.

En complément ou en alternative, à la démarche présentée ci-dessus, la première étape d'évaluation 350 peut comprend en outre une recherche par exemple dichotomique de la valeur du produit $M'_e.Cp'_e$ sur l'intervalle de valeurs [$M'_e.Cp'_e(min)$, $M'_e.Cp'_e(max)$] prédéterminé. La recherche comprend alors un calcul d'un écart entre l'évolution de la température $T_{22}(t)$ de la mono-sonde 22 et chacune parmi des évolutions de température $T_{22}(t)|_{M'e.Cp'e(i)(i)}$ calculées, par exemple par le dispositif de supervision 30, en fonction de la résistance de convection *R'cv* du second côté de la paroi 40 et d'un ensemble de valeurs transitoires $\{M'_e.Cp'_e(i)\}$ choisies successivement dans l'intervalle de valeurs [$M'_e.Cp'_e(min)$, $M'_e.Cp'_e(max)$] prédéterminé. La valeur du produit $M'_e.Cp'_e$ peut alors être évaluée 350 comme étant égale à la valeur transitoire $M'_e.Cp'_e(i)$ donnant un écart inférieur à une valeur seuil prédéterminée.

L'évaluation 350 de la valeur du produit $M'_e.Cp'_e$ de la masse $M'_e$ par la chaleur spécifique $Cp'_e$ de l'encrassement 50' déposé du second côté de la paroi 40 permet des évaluations subséquentes parmi lesquelles deux sont présentées ci-dessous.

Selon une première évaluation subséquente, si l'encrassement 50' a fait l'objet de caractérisations physiques et notamment que sa densité et sa capacité calorifique sont connues, l'évaluation 350 permet d'en déterminer l'épaisseur. Pour ce faire, on exprime la masse en termes de la densité et de l'épaisseur ; on connait la chaleur spécifique $Cp'_e$ et on en déduit l'épaisseur de la valeur de $M'_e.Cp'_e$.

La deuxième évaluation subséquente peut comprendre, en référence aux figures 11 et 12, une deuxième étape d'évaluation 360 de la chaleur spécifique $Cp'_e$ à pression constante de l'encrassement 50' déposé du second côté de la paroi 40. Cette évaluation 350 est réalisée non seulement en fonction de la valeur du produit $M'_e.Cp'_e$ telle que précédemment évaluée 350, mais aussi en fonction d'une valeur de la masse $M'_e$ de l'encrassement 50' déposé du second côté de la paroi 40. Cette dernière peut être déduite à partir des paramètres caractérisant les conditions de fonctionnement de l'échangeur de chaleur du second côté de la paroi 40 évaluées précédemment à l'étape d'évaluation 350. Parmi ces paramètres se trouvent la résistance thermique $R'_1$ (ou $R'_2$), la résistance de convection *R'cv,* auxquels s'ajoutent une conductivité thermique et une masse volumique de l'encrassement 50' déposé du second côté de la paroi 40.

Il est dès lors possible de déterminer, par exemple en répétant de façon régulière les étapes du procédé 300, une évolution en fonction du temps de la chaleur spécifique $Cp'_e$ de l'encrassement 50' déposé du second côté de la paroi 40. Cette évolution peut faire l'objet d'analyse destinée à détecter éventuellement des changements successifs de nature de l'encrassement, cette nature pouvant dépendre des conditions de fonctionnement de l'échangeur de chaleur.

Dans certains types d'encrassement, on peut dégager plusieurs phases d'encrassement de la paroi 40 : Une première phase est liée à l'encrassement de la paroi 40 ; une deuxième est liée à la croissance de l'encrassement déposé sur la paroi et une troisième est liée à la saturation éventuelle de la croissance de l'encrassement.

Comme indiqué plus haut, la première évaluation 350, et par voie le deuxième évaluation 360, sont adaptables à l'évaluation des conditions de fonctionnement correspondantes du côté de la paroi 40 où est disposée la mono-sonde 22 dont l'évolution du courant électrique est mesurée 340. Toutefois, ces évaluations particulières peuvent n'avoir d'intérêt que dans la phase de croissance de l'encrassement pour détecter éventuellement des changements successifs de nature de l'encrassement. Pendant la première phase, c'est l'état de surface de la bi-sonde 2, et non de la paroi 40, qui va contribuer à piloter l'encrassement 50. Pendant la troisième phase, la nature de l'encrassement 50 n'évolue plus.

Dès lors, le procédé selon cette deuxième évaluation 360 constitue une méthode de mesure in situ de la chaleur spécifique $Cp_e$, $Cp'_e$ de l'encrassement 50, 50' déposé d'un côté ou de l'autre de la paroi 40.

L'invention n'est pas limitée aux modes de réalisations précédemment décrits et s'étend à tous les modes de réalisation couverts par les revendications.

Par exemple, pour le procédé selon le deuxième aspect de l'invention, les étapes 110 à 130 et 140 à 160 peuvent être répétées à compter de deux instants *t3* et *t4* différents entre eux et ultérieurs aux instants *t1* et *t2.* L'étape de calcul 170 peut donc être également répétée. De la sorte, une éventuelle différence entre les résultats de l'étape de calcul 170 peut être représentative d'une évolution, voire d'une dégradation des conditions de fonctionnement de l'échangeur de chaleur et peut permettre notamment une prise de décision quant à la réalisation d'une opération de remise en état ou de remplacement de la paroi 40, voire de l'échangeur de chaleur.

Par exemple, pour le procédé selon le deuxième aspect de l'invention, les étapes 115 à 135 et 145 à 165 peuvent être répétées à compter de deux instants *t3* et *t4* différents entre eux et ultérieurs aux instants *t1* et *t2.* Chacune des étapes de calcul 175, 185 et 330 peut donc être également répétée. De la sorte, une éventuelle différence entre les résultats de chacune des étapes de calcul 175, 185 et 330 peut être représentative d'une évolution, voire d'une dégradation des conditions de fonctionnement de l'échangeur de chaleur et peut permettre notamment une prise de décision quant à la réalisation d'une opération de remise en état ou de remplacement de la paroi 40, voire de l'échangeur de chaleur.

Une répétition d'étapes à compter de deux instants *t3* et *t4* différents entre eux et ultérieurs aux instants *t1* et *t2* peut être programmée par exemple par intervalles de 10 minutes, de 24 heures, de 1 mois, de 1 an, etc. et/ou par exemple dès une première mise en fonctionnement de l'échangeur thermique et après chaque opération d'entretien et de maintenance de l'échangeur thermique.

## Revendications

**1.** Système d'évaluation (0) d'au moins une condition de fonctionnement d'un échangeur de chaleur comprenant :

- au moins une première bi-sonde (1) de température comprenant un empilement de deux mono-sondes (11, 12) de température thermiquement et électriquement isolées entre elles, et
- une paroi (40) d'un échangeur thermique à travers laquelle un transfert thermique est destiné à s'opérer entre deux fluides *f* et *f'* circulant de part et d'autre de la paroi (40) et sur laquelle est susceptible de se déposer un encrassement (50, 50'), chaque mono-sonde (11, 12) de la première bi-sonde (1) étant destinée à être reliée fonctionnellement à :
- un dispositif d'alimentation électrique (10) de chaque mono-sonde (11, 12),
- un dispositif de mesure de courant électrique (20) dans chaque mono-sonde (11, 12), et
- un dispositif de supervision (30) du dispositif d'alimentation (10) et du dispositif de mesure (20),

la première bi-sonde (1) étant disposée sur l'un parmi un premier côté et un second côté de la paroi (40) de l'échangeur de chaleur et présentant une résistance thermique $Rs_1$ connue,

la première bi-sonde (1) étant située à une première hauteur $h_1$ de circulation des fluides *f* et *f'*, la paroi (40) présentant une résistance thermique *Rp* connue, et le dispositif de mesure (20) étant propre à mesurer l'évolution du courant électrique dans au moins l'une des mono-sondes (11, 12) de la première bi-sonde (1) le système d'évaluation étant **caractérisé en ce qu'**il comprend en outre une deuxième bi-sonde (2) de température comprenant un empilement de deux mono-sondes (21, 22) de température thermiquement et électriquement isolées entre elles,
chaque mono-sonde (21, 22) de la deuxième bi-sonde (2) étant destinée à être reliée fonctionnellement au dispositif d'alimentation (10), au dispositif de mesure (20) et au dispositif de supervision (30),
la deuxième bi-sonde (2) étant disposée sur l'un parmi un premier côté et un second côté de la paroi (40) de l'échangeur de chaleur et présentant une résistance thermique $Rs_2$ connue,
la deuxième bi-sonde (2) étant située à une deuxième hauteur $h_2$ de circulation des fluides *f* et *f',* la première hauteur $h_1$ étant différente de la deuxième hauteur $h_2$, et l'échangeur thermique présentant des paramètres géométriques connus.

**2.** Procédé (300) d'évaluation d'au moins une condition de fonctionnement d'un échangeur de chaleur, mettant en œuvre un système d'évaluation (0) selon la revendication 1, destiné à opérer un transfert thermique entre deux fluides *f* et *f',* au moins l'un des fluides *f* et *f'* présentant des propriétés physiques connues, le procédé comprenant les étapes suivantes mises en œuvre en utilisant les première et deuxième bi-sondes (1, 2) et les dispositifs d'alimentation (10), de mesure (20) et de supervision (30) :

- une étape de détermination (320), en fonction des résistances thermiques $Rs_1$ et $Rs_2$ des première et deuxième bi-sondes (1, 2) et de la résistance thermique *Rp* de la paroi (40), d'au moins les conditions de fonctionnement suivantes : la température $Tf_1$ du fluide *f* du premier côté de la paroi (40), la température $Tf'_1$ du fluide *f'* du second côté de la paroi (40), la résistance thermique $R_1$ du premier côté de la paroi (40) et la résistance thermique $R'_1$ du second côté de la paroi (40), à la première hauteur $h_1$ de circulation, et la température $Tf_2$ du fluide *f* du premier côté de la paroi (40), la température $Tf'_2$ du fluide *f'* du second côté de la paroi (40), à la deuxième hauteur $h_2$ de circulation,
- une première étape de calcul (330), au moins en fonction des conditions de fonctionnement précédemment déterminées (320), des paramètres géométriques de l'échangeur thermique et des propriétés physiques d'au moins l'un des fluides *f* et *f',* de la résistance de convection *R'cv* du second côté de la paroi (40),
- une étape d'acquisition de mesure (340) de l'évolution du courant électrique dans au moins une des mono-sondes (11, 12, 21, 22), et
- une première étape d'évaluation (350), en fonction de la résistance de convection *R'cv* du second côté de la paroi (40) et de la mesure (340) d'évolution du courant électrique, d'une valeur d'un produit $M'_e.Cp'_e$ de la masse $M'_e$ par la chaleur spécifique $Cp'_e$ de l'encrassement (50') déposé du second côté de la paroi (40),

dans lequel l'étape de détermination (320) comprend les sous-étapes suivantes réalisées à l'aide de l'une respective parmi les première et deuxième bi-sondes (1,2) : à compter d'un premier instant *t1 :*

- alimenter (115) les mono-sondes (11, 12, 21, 22) de l'une respective parmi les première et deuxième bi-sondes (1,2) avec des courants électriques d'intensités différentes,
- mesurer (125) le courant électrique dans chacune des mono-sondes (11, 12, 21, 22), et
- calculer (135) la température *T11(t1), T12(t1), T21(t1), T22(t1)* de chaque mono-sonde (11, 12, 21, 22) au moins en fonction de la mesure de courant correspondante, puis

à compter d'un deuxième instant *t2,* différent du premier instant *t1 :*

- alimenter (145) les mono-sondes (11, 12, 21, 22) de l'une respective parmi les première et deuxième bi-sondes (1,2) avec des courants électriques d'intensités différentes,
- mesurer (155) le courant électrique dans chacune des mono-sondes (11, 12, 21, 22), et
- calculer (165) la température *T11(t2), T12(t2), T21(t2), T22(t2)* de chaque mono-sonde (11, 12, 21, 22) au moins en fonction de la mesure de courant correspondante,

et dans lequel l'étape de détermination (320) comprend en outre les sous-étapes suivantes :

- calculer (175), en fonction de la résistance thermique $Rs_1$ de la première bi-sonde (1), de la résistance thermique Rp de la paroi (40) et des températures *T11(t1), T12(t1), T11(t2) et T12(t2)* des mono-sondes (11, 12), les conditions de fonctionnement suivantes : la température $Tf_1$ du fluide *f* du premier côté de la paroi (40) et la

température $Tf'_1$ du fluide *f'* du second côté de la paroi (40), à la première hauteur $h_1$ de circulation,
- calculer (185), en fonction de la résistance thermique $Rs_2$ de la deuxième bi-sonde (2), de la résistance thermique *Rp* de la paroi (40) et des températures *T21(t1), T22(t1), T21(t2) et T22(t2)* des mono-sondes (21, 22), les conditions de fonctionnement suivantes : la température $Tf_2$ du fluide f du premier côté de la paroi (40), la température $Tf'_2$ du fluide *f'* du second côté de la paroi (40), la résistance thermique $R_2$ du premier côté de la paroi (40) et la résistance thermique $R'_2$ du second côté de la paroi (40), à la deuxième hauteur $h_2$ de circulation.

**3.** Procédé (300) selon la revendication 2, dans lequel l'une au moins des mono-sondes (11, 12, 21, 22) dans laquelle l'évolution du courant électrique est mesurée (340) est disposée du premier côté de la paroi.

**4.** Procédé (300) selon l'une des revendications 2 à 3, dans lequel la première étape d'évaluation (350) comprend une conversion de l'évolution du courant électrique telle que mesurée (340) en une évolution de la température de la mono-sonde (11, 12, 21, 22) dans laquelle la mesure (340) a été réalisée.

**5.** Procédé selon la revendication précédente, dans lequel la première étape d'évaluation (350) comprend en outre une recherche de la valeur du produit $M'_e.Cp'_e$ sur un intervalle de valeurs [$M'_e.Cp'_e(min)$, $M'_e.Cp'_e(max)$] prédéterminé, la recherche comprenant un calcul d'un écart entre l'évolution de la température de la mono-sonde (11, 12, 21, 22) et chacune parmi des évolutions de température calculées au moins en fonction de la résistance de convection *R'cv* du second côté de la paroi (40) et d'un ensemble de valeurs transitoires $\{M'_e.Cp'_e(i)\}$ choisies successivement dans l'intervalle de valeurs [$M'_e.Cp'_e(min)$, $M'_e.Cp'_e(max)$] prédéterminé, la valeur du produit $M'_e.Cp'_e$ étant évaluée (350) comme étant égale à la valeur transitoire $M'_e.Cp'_e(i)$ donnant un écart inférieur à une valeur seuil prédéterminée.

**6.** Procédé (300) selon l'une des revendications 4 et 5, dans lequel la première étape d'évaluation (350) comprend en outre une recherche de la valeur du produit $M'_e.Cp'_e$ sur un intervalle de valeurs [$M'_e.Cp'_e(min)$, $M'_e.Cp'_e(max)$] prédéterminé, la recherche comprenant un calcul d'écart entre l'évolution de la température de la mono-sonde (11, 12, 21, 22) et chacune parmi un ensemble d'évolutions de température calculé au moins en fonction de la résistance de convection *R'cv* du second côté de la paroi (40) et d'un ensemble correspondant de valeurs transitoires $\{M'_e.Cp'_e(i)\}$ prédéterminées dans l'intervalle de valeurs [$M'_e.Cp'_e(min)$, $M'_e.Cp'_e(max)$] prédéterminé, la valeur du produit $M'_e.Cp'_e$ étant évaluée (350) comme étant égale à la valeur transitoire $M'_e.Cp'_e(i)$ donnant un écart minimal.

**7.** Procédé (300) selon l'une quelconque des revendications 5 et 6, dans lequel chaque comparaison est réalisée sur un intervalle de temps couvert par la mesure (340) de l'évolution du courant électrique et limité à un régime instationnaire de cette évolution.

**8.** Procédé (300) selon l'une quelconque des revendications 2 à 7, comprenant en outre une deuxième étape d'évaluation (360) de la chaleur spécifique $Cp'_e$ de l'encrassement (50') déposé du second côté de la paroi (40), en fonction de la valeur du produit $M'_e.Cp'_e$ telle que précédemment évaluée (350) et d'une valeur de la masse $M'_e$ de l'encrassement (50') déposé du second côté de la paroi (40), cette dernière ayant été déduite à partir des paramètres caractérisant les conditions de fonctionnement de l'échangeur de chaleur du second côté de la paroi (40), parmi lesquels les paramètres suivants : la résistance thermique $R'_1$ (ou $R'_2$) , la résistance de convection *R'cv,* une conductivité thermique et une masse volumique de l'encrassement (50') déposé du second côté de la paroi (40).

**9.** Procédé (300) selon l'une quelconque des revendications 2 à 8, dans lequel la différence entre les hauteurs $h_1$ et $h_2$ auxquelles sont respectivement situées les première et deuxième bi-sondes (1,2) est paramétrée de sorte que des différences de températures $Tf_1$-$Tf_2$ du fluide *f* et $Tf'_1$-$Tf'_2$ du fluide *f'* entre les hauteurs $h_1$ et $h_2$ soient perceptibles par le dispositif de mesure (20) comme une différence de mesures (120, 150) de courant au moins entre une mono-sonde (11, 12) de la première bi-sonde (1) et une mono-sonde (21, 22) de la deuxième bi-sonde (2).

**10.** Procédé (300) selon l'une quelconque des revendications 2 à 9, dans lequel les propriétés physiques de chaque fluide *f, f'* comprennent la chaleur spécifique, la masse volumique, la capacité calorifique, la conductivité thermique et la viscosité dynamique, et dans lequel les paramètres géométriques de l'échangeur thermique comprennent une surface d'échange thermique comprise entre les hauteurs $h_1$ et $h_2$, un diamètre hydraulique et trois paramètres *a*, *b* et *c* dépendant de la géométrie de l'échangeur thermique.

**11.** Produit programme d'ordinateur comprenant des instructions, qui, lorsqu'elles sont interprétées et exécutées par au moins un processeur d'un dispositif de supervision (30) auquel chacune des mono-sondes (11, 12, 21, 22) d'une première bi-sonde (1) et d'une deuxième bi-sonde (2) du système d'évaluation (0) selon la revendication 1 est destinée à être reliée fonctionnellement, effectuent au moins l'étape de détermination (320) et la première étape d'évaluation (350) du procédé (300) selon l'une quelconque des revendications 2 à 10.

**Patentansprüche**

1. Bewertungssystem (0) mindestens einer Betriebsbedingung eines Wärmetauschers, umfassend:

    - mindestens eine erste Bi-Temperatursonde (1), die eine Stapelung aus zwei thermisch und elektrisch voneinander isolierten Mono-Temperatursonden (11, 12) umfasst, und
    - eine Wand (40) eines Wärmetauschers, durch die ein Wärmetransfer ablaufen soll zwischen zwei Fluiden *f* und *f'*, die zu beiden Seiten der Wand (40) zirkulieren und auf der sich eine Verschmutzung (50, 50') ablagern kann,

    wobei jede Mono-Sonde (11, 12) der ersten Bi-Sonde (1) wirkverbunden werden soll mit:

    - einer Stromversorgungsvorrichtung (10) jeder Mono-Sonde (11, 12),
    - einer Messvorrichtung (20) des elektrischen Stroms in jeder Mono-Sonde (11, 12), und- einer Überwachungsvorrichtung (30) der Versorgungsvorrichtung (10) und der Messvorrichtung (20),
    - wobei die erste Bi-Sonde (1) auf einer einer ersten Seite und einer zweiten Seite der Wand (40) des Wärmetauschers angeordnet ist und einen bekannten Wärmewiderstand $Rs_1$ aufweist,

        sich die erste Bi-Sonde (1) auf einer ersten Zirkulationshöhe $h_1$ der Fluide *f* und *f'* befindet,
        die Wand (40) einen bekannten Wärmewiderstand $R_p$ aufweist, und
        die Messvorrichtung (20) dazu geeignet ist, die Entwicklung des elektrischen Stroms in mindestens einer der Mono-Sonden (11, 12) der ersten Bi-Sonde (1) zu messen,
        Bewertungssystem **dadurch gekennzeichnet, dass** es außerdem eine zweite Bi-Temperatursonde (2) umfasst, die eine Stapelung aus zwei thermisch und elektrisch voneinander isolierten Mono-Temperatursonden (21, 22) umfasst, und
        wobei jede Mono-Sonde (21, 22) der zweiten Bi-Sonde (2) dazu bestimmt ist, mit der Versorgungsvorrichtung (10), der Messvorrichtung (20) und der Überwachungsvorrichtung (30) wirkverbunden zu sein,
        wobei die zweite Bi-Sonde (2) auf einer einer ersten Seite und einer zweiten Seite der Wand (40) des Wärmetauschers angeordnet ist und einen bekannten Wärmewiderstand $Rs_2$ aufweist,
        wobei sich die zweite Bi-Sonde (2) auf einer zweiten Zirkulationshöhe $h_2$ der Fluide *f* und *f'* befindet, wobei sich die erste Höhe $h_1$ von der zweiten Höhe $h_2$ unterscheidet, und
        der Wärmetauscher bekannte geometrische Parameter aufweist.

2. Bewertungsverfahren (300) mindestens einer Betriebsbedingung eines Wärmetauschers, das ein Bewertungssystem (0) nach Anspruch 1 umsetzt, das dazu bestimmt ist, einen Wärmetransfer zwischen zwei Fluiden *f* und *f'* durchzuführen, wobei mindestens eines der Fluide *f* und *f'* bekannte physische Eigenschaften aufweist, wobei das Verfahren die folgenden Schritte umfasst, die unter Verwendung der ersten und zweiten Bi-Sonde (1, 2) und der Versorgungs- (10), Mess- (20) und Überwachungsvorrichtung (30) umgesetzt werden:

    - einen Bestimmungsschritt (320) in Abhängigkeit von den Wärmewiderständen $Rs_1$ und $Rs_2$ der ersten und zweiten Bi-Sonde (1, 2) und des Wärmewiderstands $R_p$ der Wand (40), mindestens der folgenden Betriebsbedingungen: die Temperatur $Tf_1$ des Fluids *f* auf der ersten Seite der Wand (40), die Temperatur *Tf'1* des Fluids *f'* auf der zweiten Seite der Wand (40), der Wärmewiderstand $R_1$ auf der ersten Seite der Wand (40) und der Wärmewiderstand $R'_1$ auf der zweiten Seite der Wand (40) auf der ersten Zirkulationshöhe $h_1$, und die Temperatur $Tf_2$ des Fluids f auf der ersten Seite der Wand (40), die Temperatur *Tf'2* des Fluids *f'* auf der zweiten Seite der Wand (40) auf der zweiten Zirkulationshöhe $h_2$,
    - einen ersten Berechnungsschritt (330) mindestens in Abhängigkeit von den zuvor bestimmten (320) Betriebsbedingungen, den geometrischen Parametern des Wärmetauschers und den physischen Eigenschaften mindestens eines der Fluide *f* und *f'*, des Konvektionswiderstands *R'cv* auf der zweiten Seite der Wand (40),
    - einen Messungserhebungsschritt (340) der Entwicklung des elektrischen Stroms in mindestens einer der Mono-Sonden (11, 12, 21, 22), und
    - einen ersten Bewertungsschritt (350) in Abhängigkeit von dem Konvektionswiderstand *R'cv* auf der zweiten Seite der Wand (40) und der Messung (340) der Entwicklung des elektrischen Stroms, eines Werts eines Produkts $M'_e.Cp'_e$ der Masse $M'_e$ durch die spezifische Wärme $Cp'_e$ der Verschmutzung (50'), die auf der zweiten Seite der Wand (40) abgelagert ist,

wobei der Bestimmungsschritt (320) die folgenden Teilschritte umfasst, die mit Hilfe jeweils einer der ersten und der zweiten Bi-Sonde (1, 2) realisiert werden:
ab einem ersten Zeitpunkt t1*:*

- Versorgen (115) der Mono-Sonden (11, 12, 21, 22) einer jeweiligen der ersten und zweiten Bi-Sonde (1, 2) mit elektrischen Strömen mit unterschiedlichen Stärken,
- Messen (125) des elektrischen Stroms in jeder der Mono-Sonden (11, 12, 21, 22), und
- Berechnen (135) der Temperatur *T11(t1), T12(t1), T21(t1), T22(t1)* jeder Mono-Sonde (11, 12, 21, 22) mindestens in Abhängigkeit von der entsprechenden Strommessung, dann

ab einem zweiten Zeitpunkt *t2*, der sich von dem ersten Zeitpunkt *t1* unterscheidet:

- Versorgen (145) der Mono-Sonden (11, 12, 21, 22) einer jeweiligen der ersten und zweiten Bi-Sonde (1, 2) mit elektrischen Strömen mit unterschiedlichen Stärken,
- Messen (155) des elektrischen Stroms in jeder der Mono-Sonden (11, 12, 21, 22), und
- Berechnen (165) der Temperatur *T11(t2), T12(t2), T21(t2), T22(t2)* jeder Mono-Sonde (11, 12, 21, 22) mindestens in Abhängigkeit von der entsprechenden Strommessung,

und wobei der Bestimmungsschritt (320) außerdem die folgenden Teilschritte umfasst:

- Berechnen (175) in Abhängigkeit von dem Wärmewiderstand $Rs_1$ der ersten Bi-Sonde (1), dem Wärmewiderstand *Rp* der Wand (40) und den Temperaturen *T11(t1), T12(t1), T11(t2)* und *T12(t2)* der Mono-Sonden (11, 12), der folgenden Betriebsbedingungen: die Temperatur $Tf_1$ des Fluids *f* auf der ersten Seite der Wand (40) und die Temperatur *Tf'1* des Fluids *f* auf der zweiten Seite der Wand (40) auf der ersten Zirkulationshöhe $h_1$,
- Berechnen (185) in Abhängigkeit von dem Wärmewiderstand $Rs_2$ der zweiten Bi-Sonde (2), dem Wärmewiderstand Rp der Wand (40) den Temperaturen *T21(t1), T22(t1), T21(t2)* und *T22(t2)* der Mono-Sonden (21, 22), der folgenden Betriebsbedingungen: die Temperatur $Tf_2$ des Fluids *f* auf der ersten Seite der Wand (40), die Temperatur *Tf'2* des Fluids *f* auf der zweiten Seite der Wand (40), der Wärmewiderstand *R2* auf der ersten Seite der Wand (40) und der Wärmewiderstand $R'_2$ auf der zweiten Seite der Wand (40) auf der zweiten Zirkulationshöhe $h_2$.

**3.** Verfahren (300) nach Anspruch 2, wobei mindestens eine der Mono-Sonden (11, 12, 21, 22), in der die Entwicklung des elektrischen Stroms gemessen wird (340) auf der ersten Seite der Wand angeordnet ist.

**4.** Verfahren (300) nach einem der Ansprüche 2 bis 3, wobei der erste Bewertungsschritt (350) eine Umwandlung der Entwicklung des elektrischen Stroms wie gemessen (340) in eine Entwicklung der Temperatur der Mono-Sonde (11, 12, 21, 22), in der die Messung (340) durchgeführt wurde, umfasst.

**5.** Verfahren nach dem vorstehenden Anspruch, wobei der erste Bewertungsschritt (350) außerdem eine Suche des Werts des Produkts $M'_e.Cp'_e$ auf einem vorbestimmten Intervall von Werten [$M'_e.Cp'_e(min), M'_e.Cp'_e(max)$] umfasst, wobei die Suche eine Berechnung einer Abweichung zwischen der Entwicklung der Temperatur der Mono-Sonde (11, 12, 21, 22) und jeder aus Temperaturentwicklungen umfasst, die mindestens in Abhängigkeit von dem Konvektionswiderstand *R'cv* auf der zweiten Seite der Wand (40) und einer Einheit vorübergehender Werte {$M'_e.Cp'_e$ (i)} berechnet werden, die nacheinander aus dem vorbestimmten Intervall von Werten [$M'_e.Cp'_e(min), M_e.Cp'_e$(max)] ausgewählt werden, wobei der Wert des Produkts $M'_e.Cp'_e$ als gleich dem vorübergehenden Wert $M'_e.Cp'_e$ (i) bewertet (350) wird, der eine Abweichung ergibt, die kleiner ist als ein vorbestimmter Schwellenwert.

**6.** Verfahren nach einem der Ansprüche 4 und 5, wobei der erste Bewertungsschritt (350) außerdem eine Suche des Werts des Produkts $M'_e.Cp'_e$ auf einem vorbestimmten Intervall von Werten [$M'_e.Cp'_e(min), M'_e.Cp'_e(max)$] umfasst, wobei die Suche eine Berechnung einer Abweichung zwischen der Entwicklung der Temperatur der Mono-Sonde (11, 12, 22) und jeder aus einer Einheit von Temperaturentwicklungen umfasst, die mindestens in Abhängigkeit von dem Konvektionswiderstand *R'cv* auf der zweiten Seite der Wand (40) und einer entsprechenden Einheit vorübergehender Werte {$M'_e.Cp'_e$ (i)}, die in dem vorbestimmten Intervall von Werten [$M'_e.Cp'_e$ (min), $M'_e.Cp'_e$ (max)] vorbestimmt sind, berechnet werden, wobei der Wert des Produkts $M'_e.Cp'_e$ als gleich dem vorübergehenden Wert $M'_e.Cp'_e$ (i), der eine minimale Abweichung ergibt, bewertet (350) wird.

**7.** Verfahren (300) nach einem der Ansprüche 5 und 6, wobei jeder Vergleich auf einem Zeitintervall durchgeführt wird, das von der Entwicklungsmessung (340) des elektrischen Stroms abgedeckt ist und auf einen instationären Zustand dieser Entwicklung beschränkt ist.

**8.** Verfahren (300) nach einem der Ansprüche 2 bis 7, das außerdem einen zweiten Bewertungsschritt (360) der spezifischen Wärme $M'_e.Cp'_e$ der Verschmutzung (50'), die auf der zweiten Seite der Wand (40) abgelagert ist, in Abhängigkeit von dem Wert des Produkts $M'_e.M'_e.Cp'_e$ wie zuvor bewertet (350) und einem Wert der Masse $M'_e$ der Verschmutzung (50'), die auf der zweiten Seite der Wand (40) abgelagert ist, umfasst, wobei diese Letztere ausgehend von den Parametern abgeleitet wurde, die die Betriebsbedingungen des Wärmetauschers auf der zweiten Seite der Band (40) charakterisieren, darunter die folgenden Parameter: der Wärmewiderstand $R'_1$ (oder $R'_2$), der Konvektionswiderstand *R'cv,* eine Wärmeleitfähigkeit und eine Dichte der Verschmutzung (50'), die auf der zweiten Seite der Wand (40) abgelagert ist.

**9.** Verfahren (300) nach einem der Ansprüche 2 bis 8, wobei der Unterschied zwischen den Höhen $h_1$ und $h_2$, auf welchen sich jeweils die erste und die zweite Bi-Sonde (1, 2) befinden, derart parametriert ist, dass Temperaturunterschiede $Tf_1$-$Tf_2$ des Fluids f und $Tf'_1$-$Tf'_2$ des Fluids *f* zwischen den Höhen $h_1$ und $h_2$ für die Messvorrichtung (20) als eine Strommessdifferenz (120, 150) mindestens zwischen einer Mono-Sonde (11, 12) der ersten Bi-Sonde (1) und einer Mono-Sonde (21, 22) der zweiten Bi-Sonde (2) wahrnehmbar sind.

**10.** Verfahren (300) nach einem der Ansprüche 2 bis 9, wobei die physischen Eigenschaften jedes Fluids *f, f'* die spezifische Wärme, die Dichte, den Wärmeinhalt, die Wärmeleitfähigkeit und die dynamische Viskosität umfassen, und wobei die geometrischen Parameter des Wärmetauschers eine Wärmetauscheroberfläche umfasst, die zwischen den Höhen $h_1$ und $h_2$ liegt, wobei ein hydraulischer Durchmesser und drei Parameter a, *b* und c von der Geometrie des Wärmetauschers abhängen.

**11.** Computerprogrammprodukt, das Anweisungen umfasst, die, wenn sie durch mindestens einen Prozessor einer Überwachungsvorrichtung (30), mit der jede der Mono-Sonden (11, 12, 21, 22) einer ersten Bi-Sonde (1) und einer zweiten Bi-Sonde (2) des Bewertungssystems (0) nach Anspruch 1 wirkverbunden werden soll, ausgelegt und ausgeführt werden, mindestens den Bestimmungsschritt (320) und den ersten Bewertungsschritt (350) des Verfahrens (300) nach einem der Ansprüche 2 bis 10 durchführen.

## Claims

**1.** System (0) for evaluating at least one operating condition of a heat exchanger comprising:

- at least one temperature first double sensor (1) comprising a stack of two temperature single probes (11, 12), thermally and electrically isolated from one another, and
- a thermal exchanger wall (40) through which a thermal transfer is intended to be performed between two fluids *f* and *f'* circulating on either side of the wall (40), and on which a clogging (50, 50') is likely to be deposited,

each single probe (11, 12) of the first double probe (1) being intended to be operationally connected to:

- an electrical supply device (10) of each single probe (11, 12),
- an electrical current measuring device (20) in each single probe (11, 12), and
- a supervision device (30) of the supply device (10) and the measuring device (20),

the first double probe (1) being disposed on one from among a first side and a second side of the wall (40) of the heat exchanger and having a known thermal resistance $Rs_1$,
the first double probe (1) being disposed at a first circulation height $h_1$ of the fluids *f* and *f',*
the wall (40) having a known thermal resistance Rp, and
the measuring device (20) being able to measuring the development of the electrical current in at least one of the single probes (11, 12) of the first double probe (1),
the evaluation system being **characterised in that** it further comprises a temperature second double probe (2) comprising a stack of two temperature single probes (21, 22), thermally and electrically isolated from one another,
each single probe (21, 22) of the second double probe (2) being intended to be operationally connected to the supply device (10), to the measuring device (20) and to the supervision device (30),
the second double probe (2) being disposed on one from among a first side and a second side of the wall (40) of the heat exchanger and having a known thermal resistance $Rs_2$, the second double probe (2) being located at a second circulation height $h_2$ of the fluids *f* and *f'*, the first height $h_1$ being different from the second height $h_2$, and
the thermal exchanger having known geometric parameters.

**2.** Method (300) for evaluating at least one operating condition of a heat exchanger, implementing an evaluation system (0) according to claim 1, intended to perform a thermal transfer between two fluids *f* and *f'*, at least one of the fluids *f* and *f'* having known physical properties, the method comprising the following steps implemented by using the first and second double probes (1, 2) and the supply (10), measuring (20) and supervision (30) devices;

- a step (320) of determining, according to the thermal resistances $Rs_1$ and $Rs_2$ of the first and second double probes (1, 2) and of the thermal resistance Rp of the wall (40), of at least the following operating conditions: the temperature $Tf_1$ of the fluid *f* on the first side of the wall (40), the temperature $Tf'_1$ of the fluid *f'* on the second side of the wall (40), the thermal resistance $R_1$ on the first side of the wall (40) and the thermal resistance $R'_1$ on the second side of the wall (40), at the first circulation height $h_1$, and the temperature $Tf_2$ of the fluid *f* on the first side of the wall (40), the temperature $Tf'_2$ of the fluid *f'* on the second side of the wall (40), at the second circulation height $h_2$,
- a first step (330) of calculating, at least according to the operating conditions determined (320) above, the geometric parameters of the thermal exchanger and of the physical properties of at least one of the fluids *f* and f', of the convection resistance *R'cv* on the second side of the wall (40),
- an acquisition step (340) of measuring the development of the electrical current in at least one of the single probes (11, 12, 21, 22), and
- a first step (350) of evaluating, according to the convection resistance *R'cv* on the second side of the wall (40) and of measuring (340) the development of the electrical current, of a value of a product $M'_e.Cp'_e$ of the mass $M'_e$ by the specific heat $Cp'_e$ of the clogging (50') deposited on the second side of the wall (40), in which the determination step (320) comprises the following substeps carried out using a respective one from among the first and second double probes (1, 2): from a first instant *t1:*
- supplying (115) the single probes (11, 12, 21, 22) of a respective one from among the first and second double probes (1, 2) with electrical currents of different intensities,
- measuring (125) the electrical current in each of the single probes (11, 12, 21, 22), and
- calculating (135) the temperature *T11(t1), T12(t1), T21(t1), T22(t1)* of each single probe (11, 12, 21, 22) at least according to the corresponding current measurement, then

from a second instant *t2,* different from the first instant *t1:*

- supplying (145) the single probes (11, 12, 21, 22) of a respective one from among the first and second double probes (1, 2) with electrical currents of different intensities,
- measuring (155) the electrical current in each of the single probes (11, 12, 21, 22), and
- calculating (165) the temperature *T11(t2), T12(t2), T21(t2), T22(t2)* of each single probe (11, 12, 21, 22) at least according to the corresponding current measurement,

and in which the determination step (320) further comprises the following substeps:

- calculating (175), according to the thermal resistance $Rs_2$ of the first double probe (1), the thermal resistance Rp of the wall (40) and the temperatures *T11(t1), T12(t1), T11(t2)* and *T12(t2)* of the single probes (11, 12), the following operating conditions: the temperature $Tf_1$ of the fluid *f* on the first side of the wall (40) and the temperature $Tf'_1$ of the fluid *f'* on the second side of the wall (40), at the first circulation height $h_1$,
- calculating (185), according to the thermal resistance $Rs_2$ of the second double probe (2), the thermal resistance Rp of the wall (40) and the temperatures *T21(t1), T22(t1), T21(t2)* and *T22(t2)* of the single probes (21, 22), the following operating conditions: the temperature $Tf_2$ of the fluid *f* on the first side of the wall (40) and the temperature $Tf'_2$ of the fluid *f'* on the second side of the wall (40), the thermal resistance $R_2$ on the first side of the wall (40) and the thermal resistance $R'_2$ on the second side of the wall (40) at the second circulation height $h_2$.

**3.** Method (300) according to claim 2, wherein at least one of the single probes (11, 12, 21, 22) in which the development of the electrical current is measured (340) is disposed on the first side of the wall.

**4.** Method (300) according to any one of claims 2 to 3, wherein the first evolution step (350) comprises a conversion of the development of the electrical current such as measured (340) into a development of the temperature of the single probe (11, 12, 21, 22) in which the measurement (340) has been taken.

5. Method according to the preceding claim, wherein the first evaluation step (350) further comprises a search of the value of the product $M'_e.Cp'_e$ over a predetermined interval of values [$M'_e.Cp'_e(min)$, $M'_e.Cp'_e(max)$], the search comprising a calculation of a difference between the development of the temperature of the single probe (11, 12, 21, 22) and each from among the temperature developments calculated at least according to the convection resistance $R'cv$ on the second side of the wall (40) and a set of transitional values $\{M'_e\text{-}Cp'_e(i)\}$ chosen successively in the predetermined interval of values [$M'_e.Cp'_e(min)$, $M'_e.Cp'_e(max)$], the value of the product $M'_e.Cp'_e$ being evaluated (350) as being equal to the transitional value $M'_e.Cp'_e(i)$ giving a difference less than a predetermined threshold value.

6. Method (300) according to any one of claims 4 and 5, wherein the first evaluation step (350) further comprises a search of the value of the product $M'_e.Cp'_e$ over a predetermined interval of values [$M'_e.Cp'_e(min)$, $M'_e.Cp'_e(max)$], the search comprising a calculation of difference between the development of the temperature of the single probe (11, 12, 21, 22) and each from among a set of temperature developments calculated at least according to the convection resistance $R'cv$ on the second side of the wall (40) and of a corresponding predetermined set of transitional values $\{M'_e\text{-}Cp'_e(i)\}$ in the predetermined interval of values [$M'_e.Cp'_e(min)$, $M'_e.Cp'_e(max)$], the value of the product $M'_e.Cp'_e$ being evaluated (350) as being equal to the transitional value $M'_e.Cp'_e(i)$ giving a minimum difference.

7. Method (300) according to any one of claims 5 and 6, wherein each comparison is made over a time interval covered by the measurement (340) of the development of the electrical current and limited to unsteady conditions of this development.

8. Method (300) according to any one of claims 2 to 7, further comprising a second step (360) of evaluating the specific heat $Cp'_e$ of the clogging (50') deposited on the second side of the wall (40), according to the value of the product $M'_e.Cp'_e$ such as evaluated (350) above, and a value of the mass $M'_e$ of the clogging (50') deposited on the second side of the wall (40), the latter having been deducted from the parameters characterising the operating conditions of the heat exchanger on the second side of the wall (40), among which the following parameters: the thermal resistance $R'_1$ (or $R'_2$), the convection resistance $R'cv$, a thermal conductivity and a density of the clogging (50') deposited on the second side of the wall (40).

9. Method (300) according to any one of claims 2 to 8, wherein the difference between the heights $h_1$ and $h_2$ at which the first and second double probes (1, 2) are respectively located, is configured such that the temperature differences $Tf_1$-$Tf_2$ of the fluid *f* and $Tf'_1$-$Tf'_2$ of the fluid *f'* between the heights $h_1$ and $h_2$ are perceptible by the measuring device (20) as a difference of current measurements (120, 150) at least between a single probe (11, 12) of the first double probe (1) and a single probe (21, 22) of the second double probe (2).

10. Method (300) according to any one of claims 2 to 9, wherein the physical properties of each fluid *f*, *f'* comprise the specific heat, the density, the calorific capacity, the thermal conductivity and the dynamic viscosity, and in which the geometric parameters of the thermal exchanger comprise a thermal exchange surface comprised between the heights $h_1$ and $h_2$, a hydraulic diameter and three parameters a, b and c depending on the geometry of the thermal exchanger.

11. Computer program product comprising instructions, which, when they are interpreted and executed by at least one processor of a supervision device (30) to which each of the single probes (11, 12, 21, 22) of a first double probe (1) and of a second double probe (2) of the evaluation system (0) according to claim 1 is intended to be operationally connected, carry out at least the determination step (320) and the first evaluation step (350) of the method (300) according to any one of claims 2 to 10.

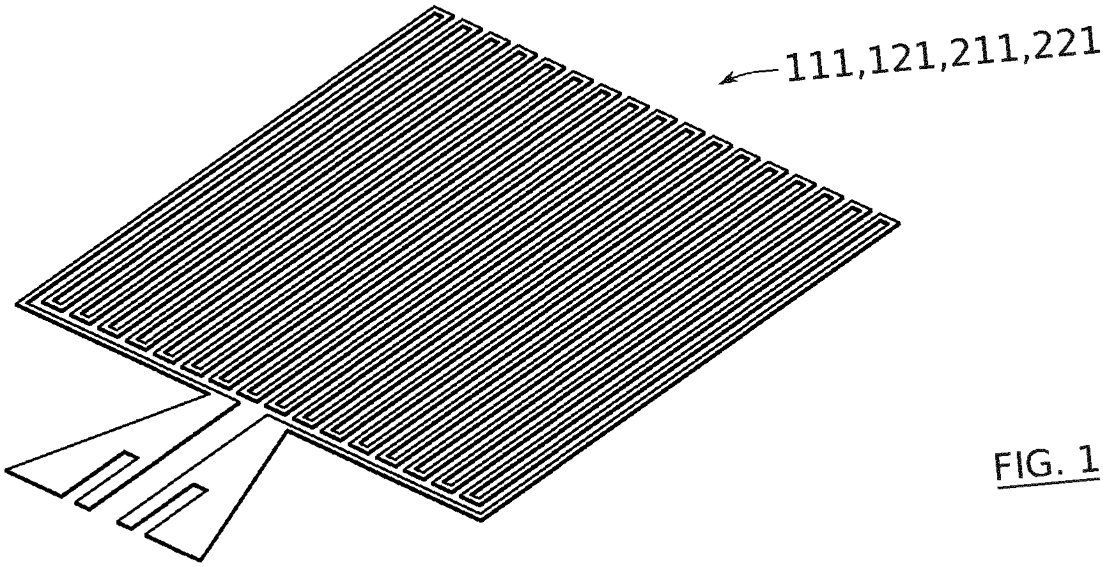


FIG. 1

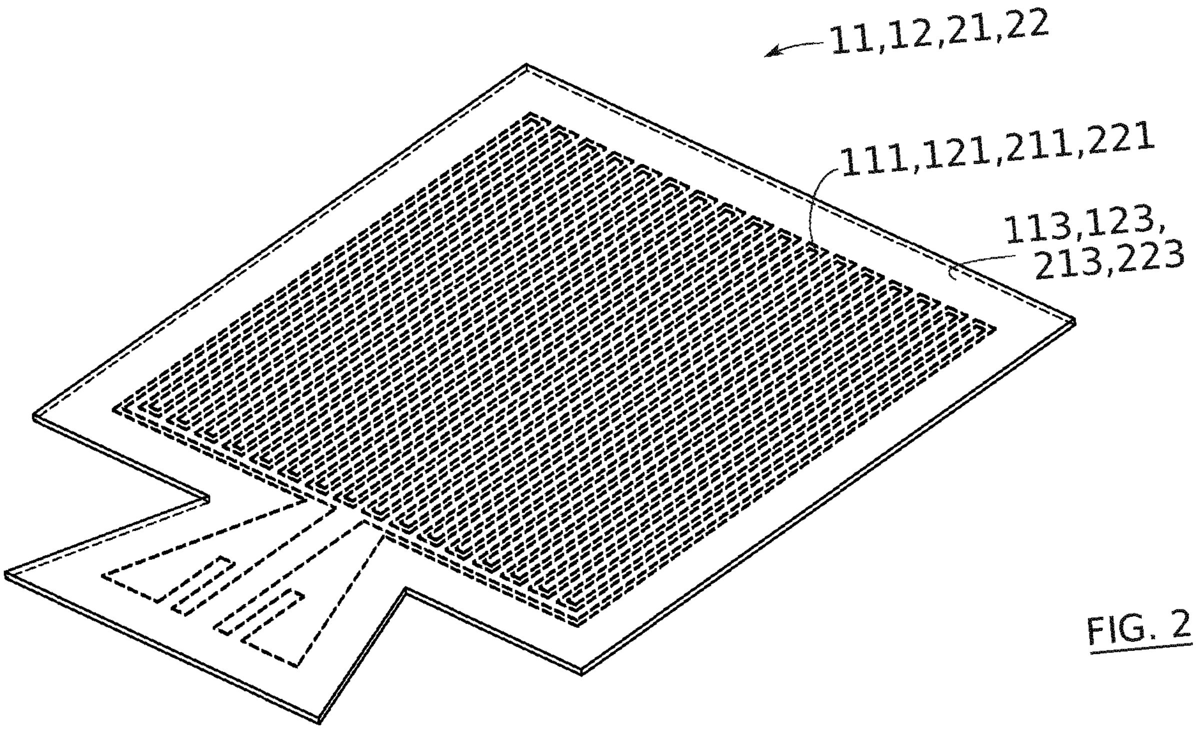


FIG. 2

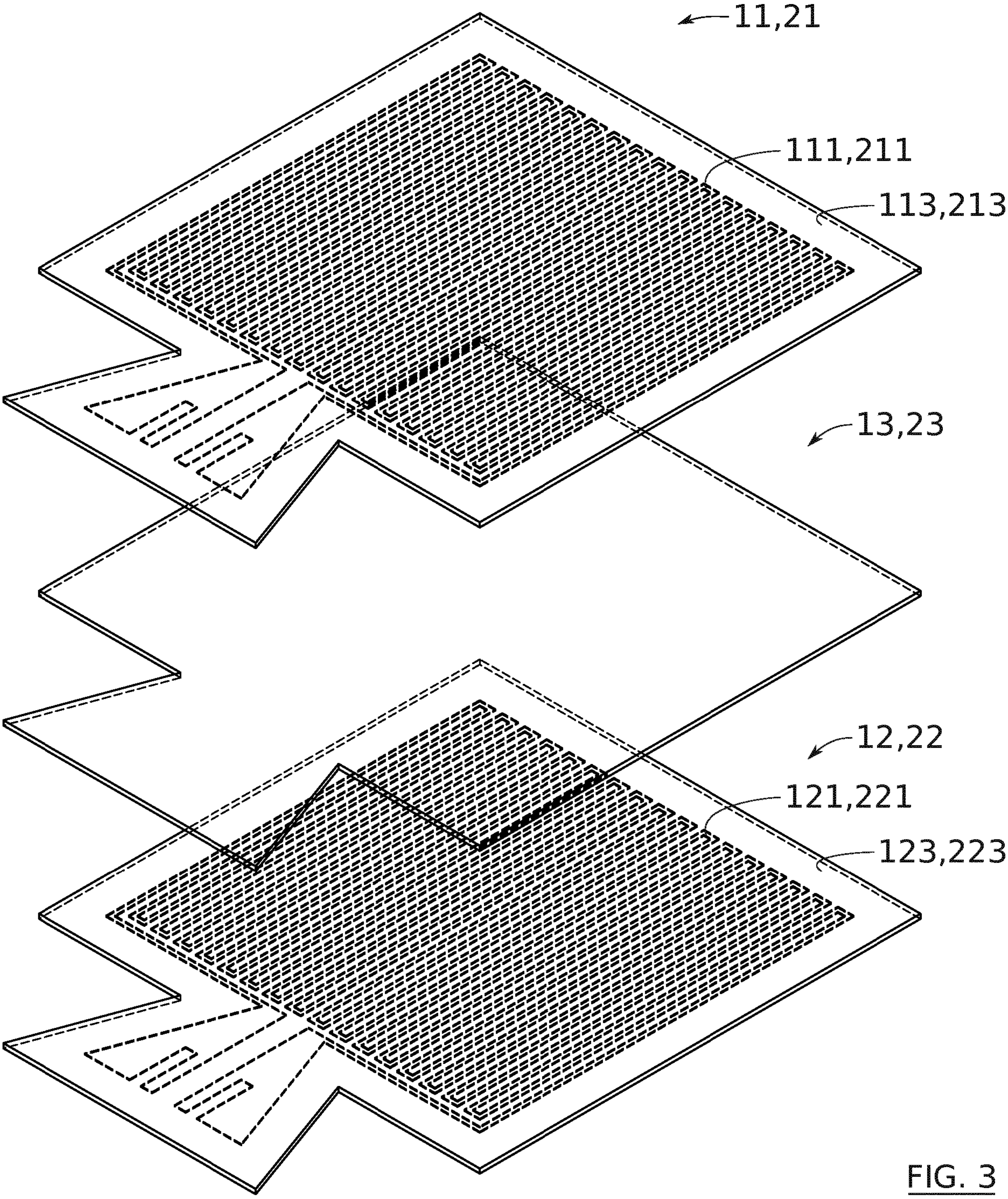


FIG. 3

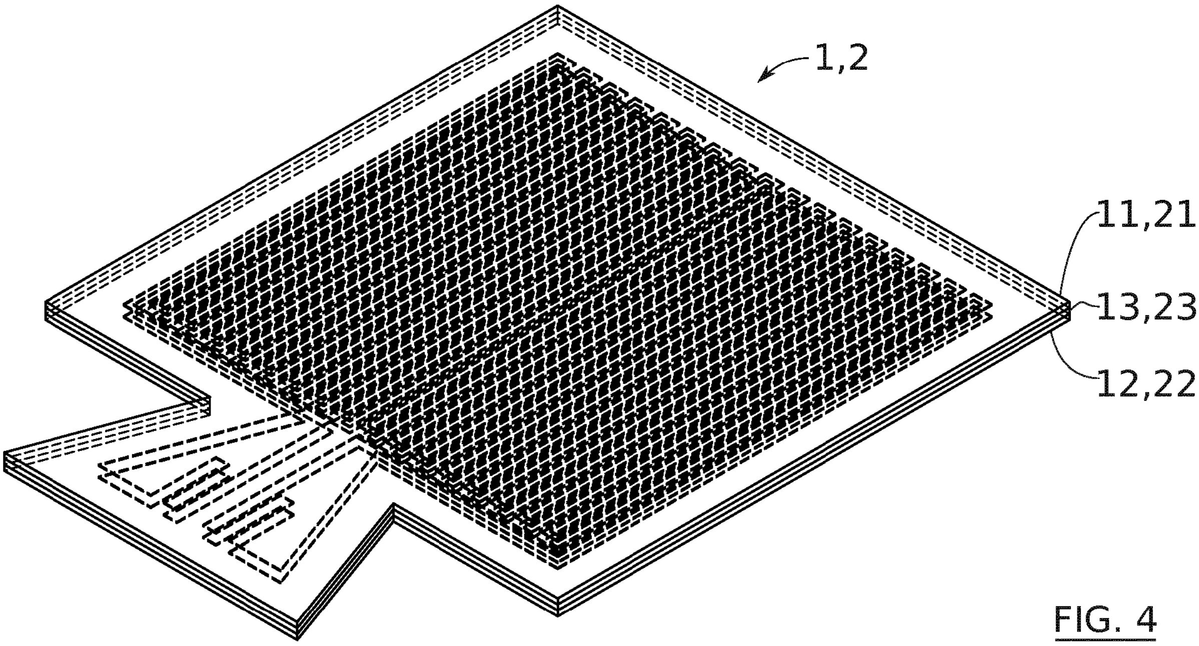


FIG. 4

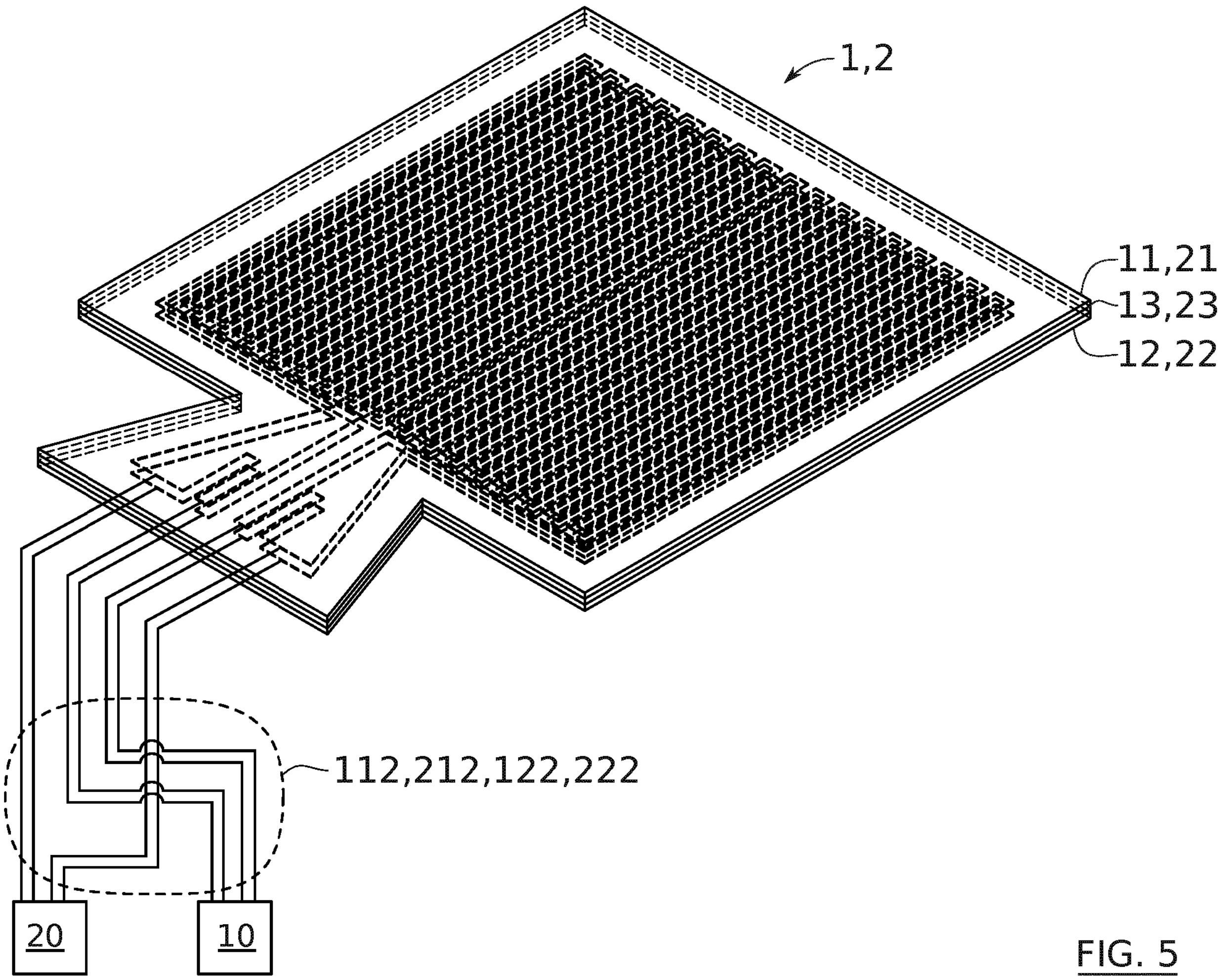


FIG. 5

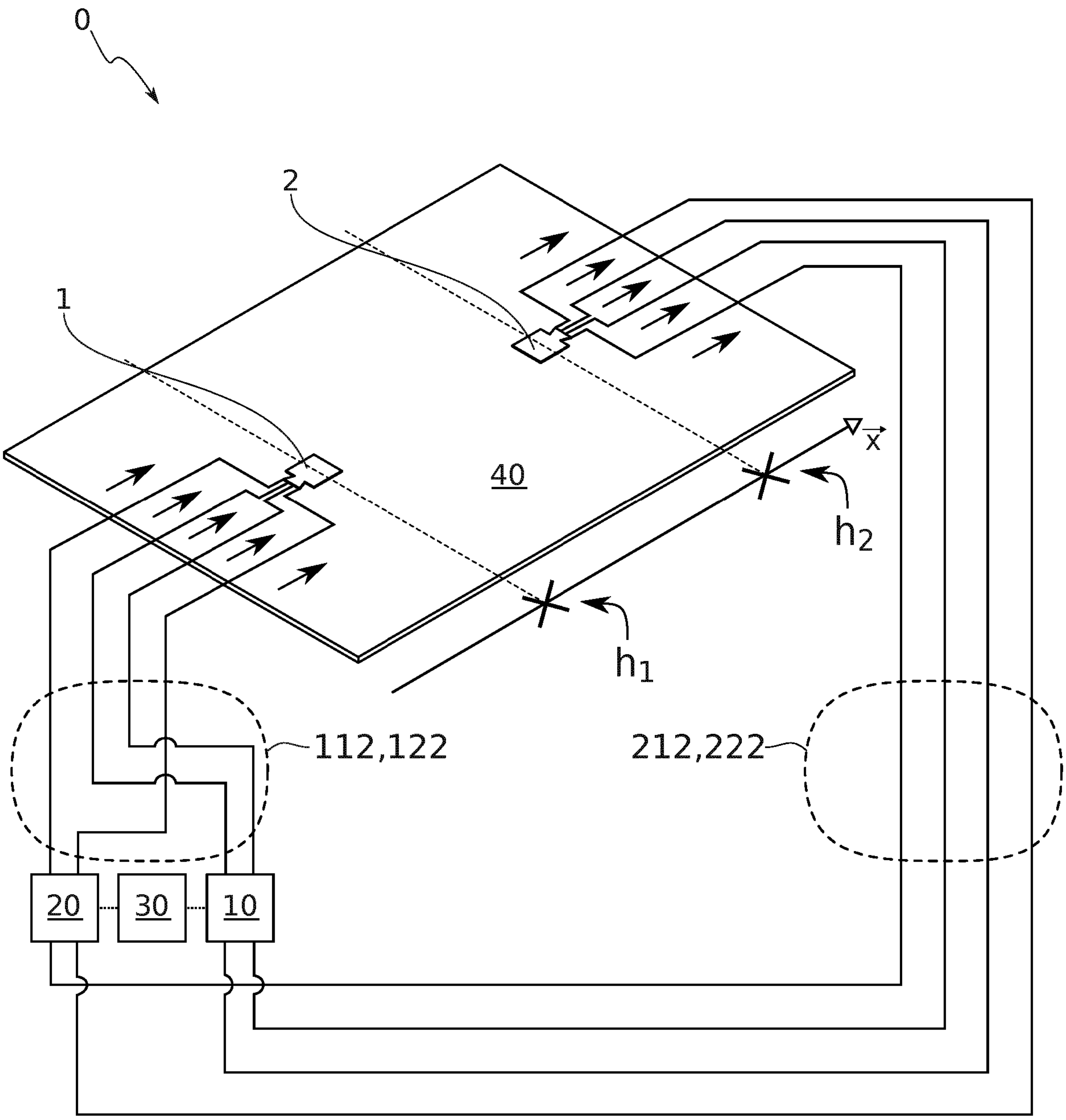


FIG. 6

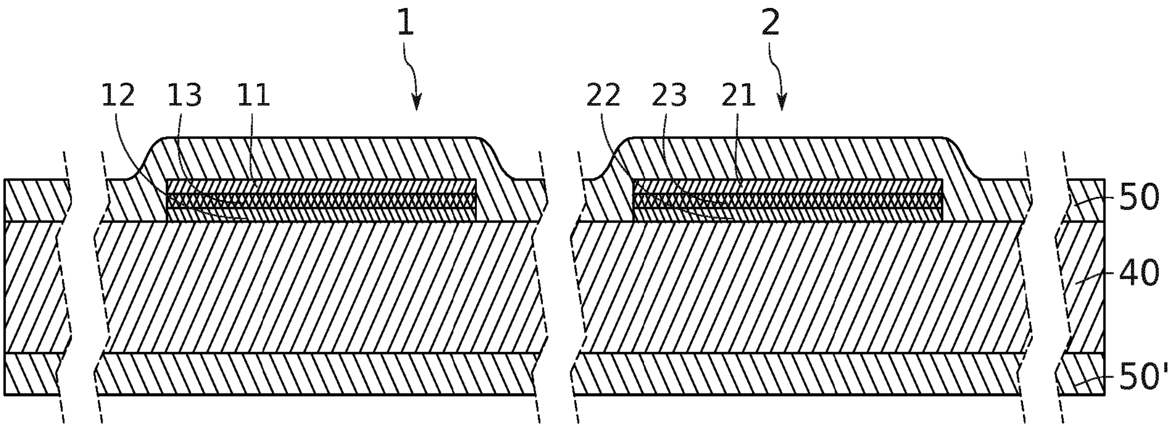
1
2
12
13
11
22
23
21
50
40
50'

FIG. 7

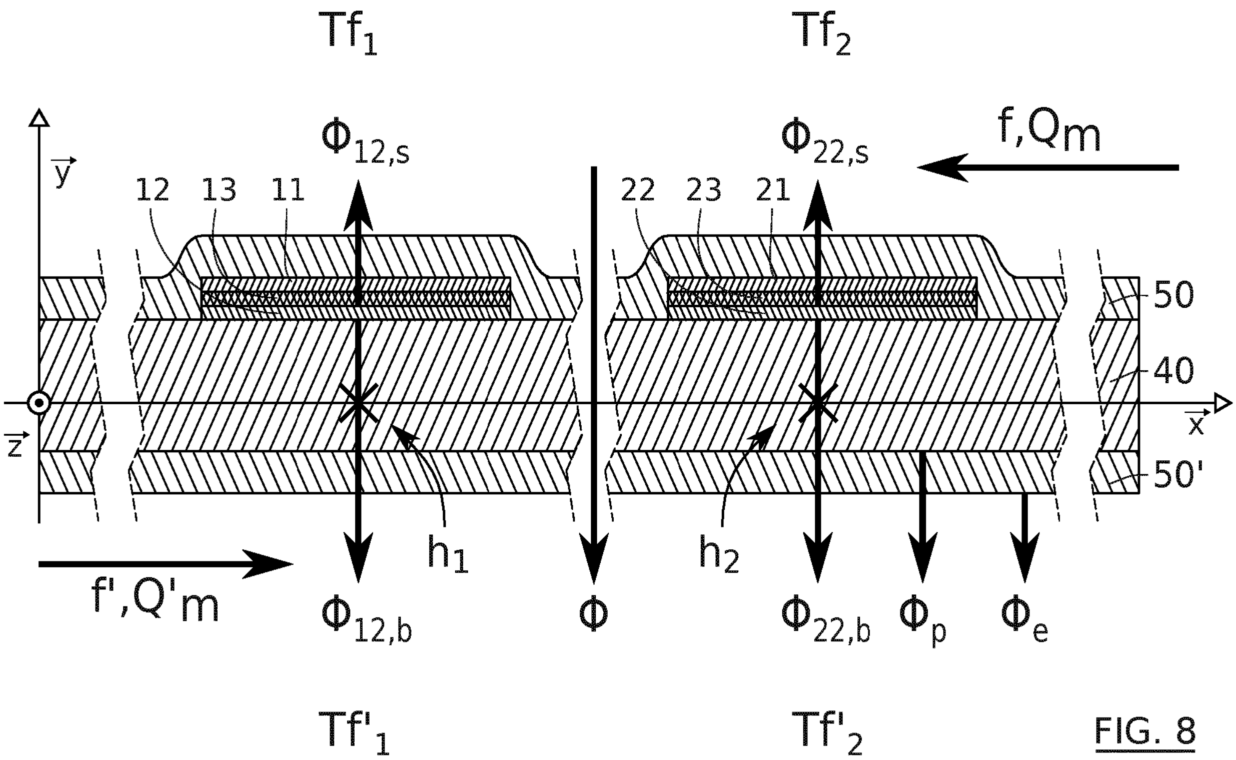
Tf1
Tf2
Φ12,s
Φ22,s
f,Qm
y
12
13
11
22
23
21
50
40
x
z
50'
h1
h2
f',Q'm
Φ12,b
Φ
Φ22,b
Φp
Φe
Tf'1
Tf'2

FIG. 8

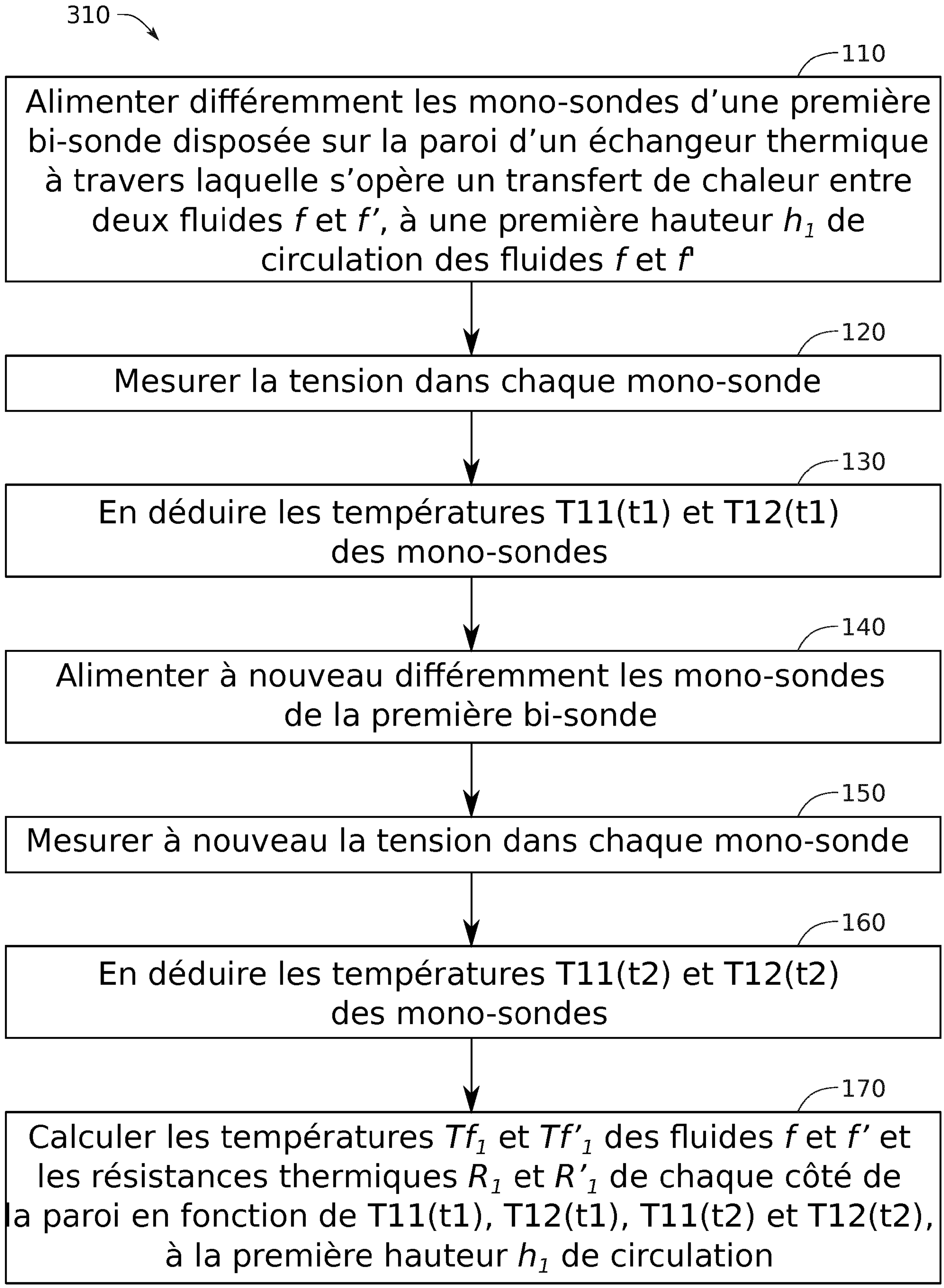
310
110
Alimenter différemment les mono-sondes d'une première bi-sonde disposée sur la paroi d'un échangeur thermique à travers laquelle s'opère un transfert de chaleur entre deux fluides *f* et *f'*, à une première hauteur $h_1$ de circulation des fluides *f* et *f'*
120
Mesurer la tension dans chaque mono-sonde
130
En déduire les températures T11(t1) et T12(t1) des mono-sondes
140
Alimenter à nouveau différemment les mono-sondes de la première bi-sonde
150
Mesurer à nouveau la tension dans chaque mono-sonde
160
En déduire les températures T11(t2) et T12(t2) des mono-sondes
170
Calculer les températures $Tf_1$ et $Tf'_1$ des fluides *f* et *f'* et les résistances thermiques $R_1$ et $R'_1$ de chaque côté de la paroi en fonction de T11(t1), T12(t1), T11(t2) et T12(t2), à la première hauteur $h_1$ de circulation

FIG. 9

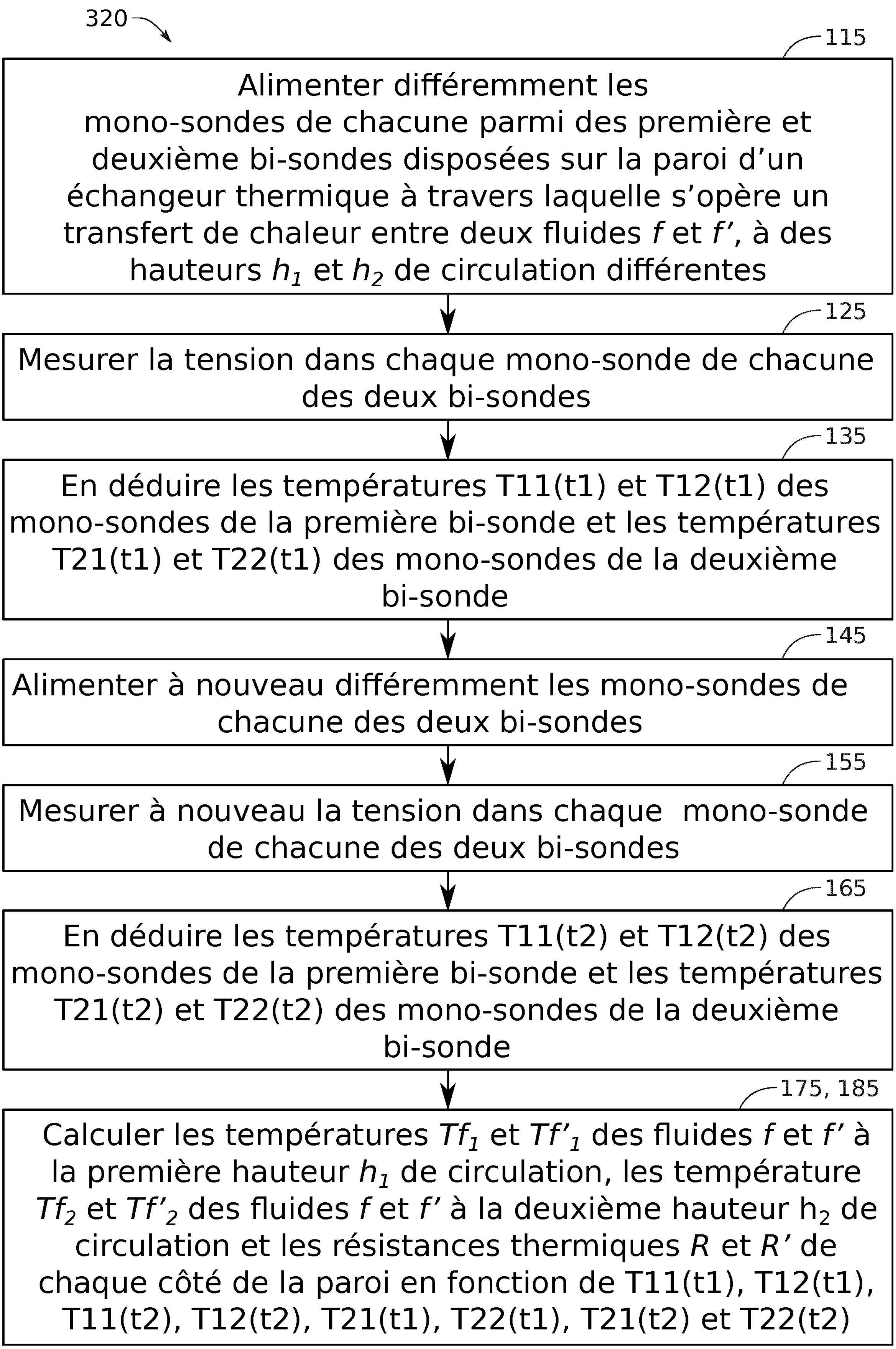
320
115
Alimenter différemment les mono-sondes de chacune parmi des première et deuxième bi-sondes disposées sur la paroi d'un échangeur thermique à travers laquelle s'opère un transfert de chaleur entre deux fluides *f* et *f'*, à des hauteurs $h_1$ et $h_2$ de circulation différentes
125
Mesurer la tension dans chaque mono-sonde de chacune des deux bi-sondes
135
En déduire les températures T11(t1) et T12(t1) des mono-sondes de la première bi-sonde et les températures T21(t1) et T22(t1) des mono-sondes de la deuxième bi-sonde
145
Alimenter à nouveau différemment les mono-sondes de chacune des deux bi-sondes
155
Mesurer à nouveau la tension dans chaque mono-sonde de chacune des deux bi-sondes
165
En déduire les températures T11(t2) et T12(t2) des mono-sondes de la première bi-sonde et les températures T21(t2) et T22(t2) des mono-sondes de la deuxième bi-sonde
175, 185
Calculer les températures $Tf_1$ et $Tf'_1$ des fluides *f* et *f'* à la première hauteur $h_1$ de circulation, les température $Tf_2$ et $Tf'_2$ des fluides *f* et *f'* à la deuxième hauteur $h_2$ de circulation et les résistances thermiques *R* et *R'* de chaque côté de la paroi en fonction de T11(t1), T12(t1), T11(t2), T12(t2), T21(t1), T22(t1), T21(t2) et T22(t2)

FIG. 10

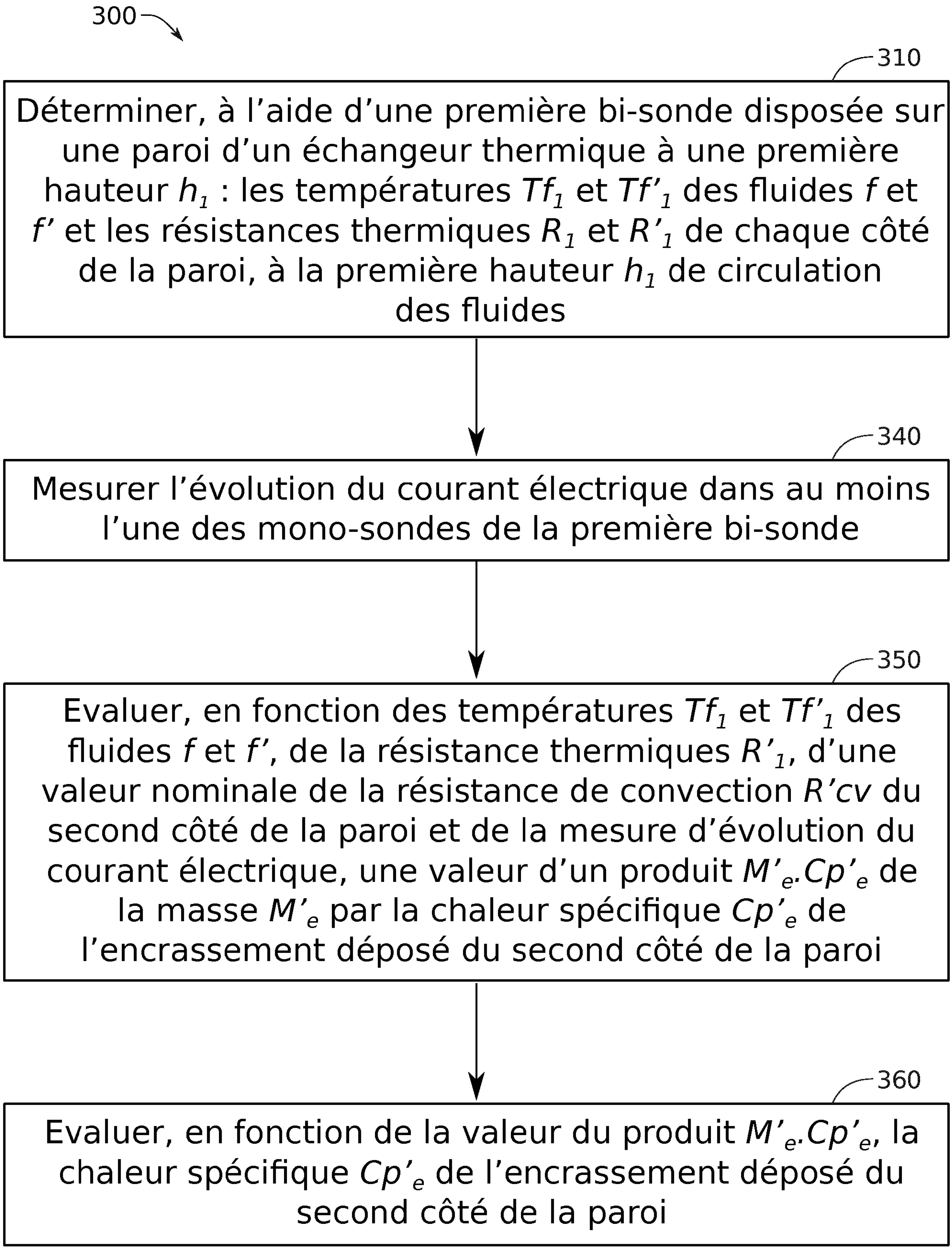
300
310
Déterminer, à l'aide d'une première bi-sonde disposée sur une paroi d'un échangeur thermique à une première hauteur $h_1$ : les températures $Tf_1$ et $Tf'_1$ des fluides $f$ et $f'$ et les résistances thermiques $R_1$ et $R'_1$ de chaque côté de la paroi, à la première hauteur $h_1$ de circulation des fluides
340
Mesurer l'évolution du courant électrique dans au moins l'une des mono-sondes de la première bi-sonde
350
Evaluer, en fonction des températures $Tf_1$ et $Tf'_1$ des fluides $f$ et $f'$, de la résistance thermiques $R'_1$, d'une valeur nominale de la résistance de convection $R'cv$ du second côté de la paroi et de la mesure d'évolution du courant électrique, une valeur d'un produit $M'_e.Cp'_e$ de la masse $M'_e$ par la chaleur spécifique $Cp'_e$ de l'encrassement déposé du second côté de la paroi
360
Evaluer, en fonction de la valeur du produit $M'_e.Cp'_e$, la chaleur spécifique $Cp'_e$ de l'encrassement déposé du second côté de la paroi

FIG. 11

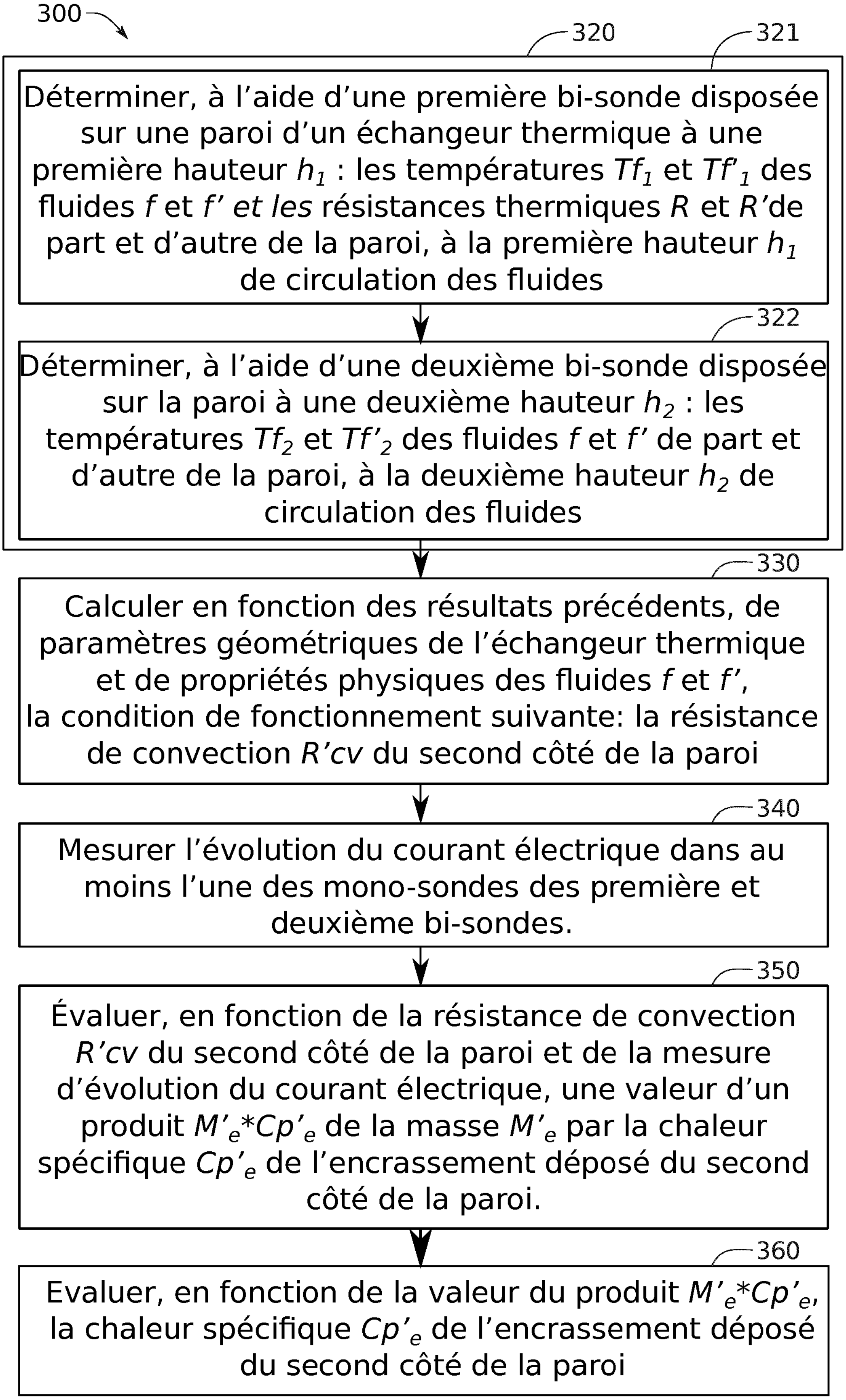
300
320
321
Déterminer, à l'aide d'une première bi-sonde disposée sur une paroi d'un échangeur thermique à une première hauteur $h_1$ : les températures $Tf_1$ et $Tf'_1$ des fluides *f* et *f' et les* résistances thermiques *R* et *R'* de part et d'autre de la paroi, à la première hauteur $h_1$ de circulation des fluides
322
Déterminer, à l'aide d'une deuxième bi-sonde disposée sur la paroi à une deuxième hauteur $h_2$ : les températures $Tf_2$ et $Tf'_2$ des fluides *f* et *f'* de part et d'autre de la paroi, à la deuxième hauteur $h_2$ de circulation des fluides
330
Calculer en fonction des résultats précédents, de paramètres géométriques de l'échangeur thermique et de propriétés physiques des fluides *f* et *f'*, la condition de fonctionnement suivante: la résistance de convection *R'cv* du second côté de la paroi
340
Mesurer l'évolution du courant électrique dans au moins l'une des mono-sondes des première et deuxième bi-sondes.
350
Évaluer, en fonction de la résistance de convection *R'cv* du second côté de la paroi et de la mesure d'évolution du courant électrique, une valeur d'un produit $M'_e*Cp'_e$ de la masse $M'_e$ par la chaleur spécifique $Cp'_e$ de l'encrassement déposé du second côté de la paroi.
360
Evaluer, en fonction de la valeur du produit $M'_e*Cp'_e$, la chaleur spécifique $Cp'_e$ de l'encrassement déposé du second côté de la paroi

FIG. 12

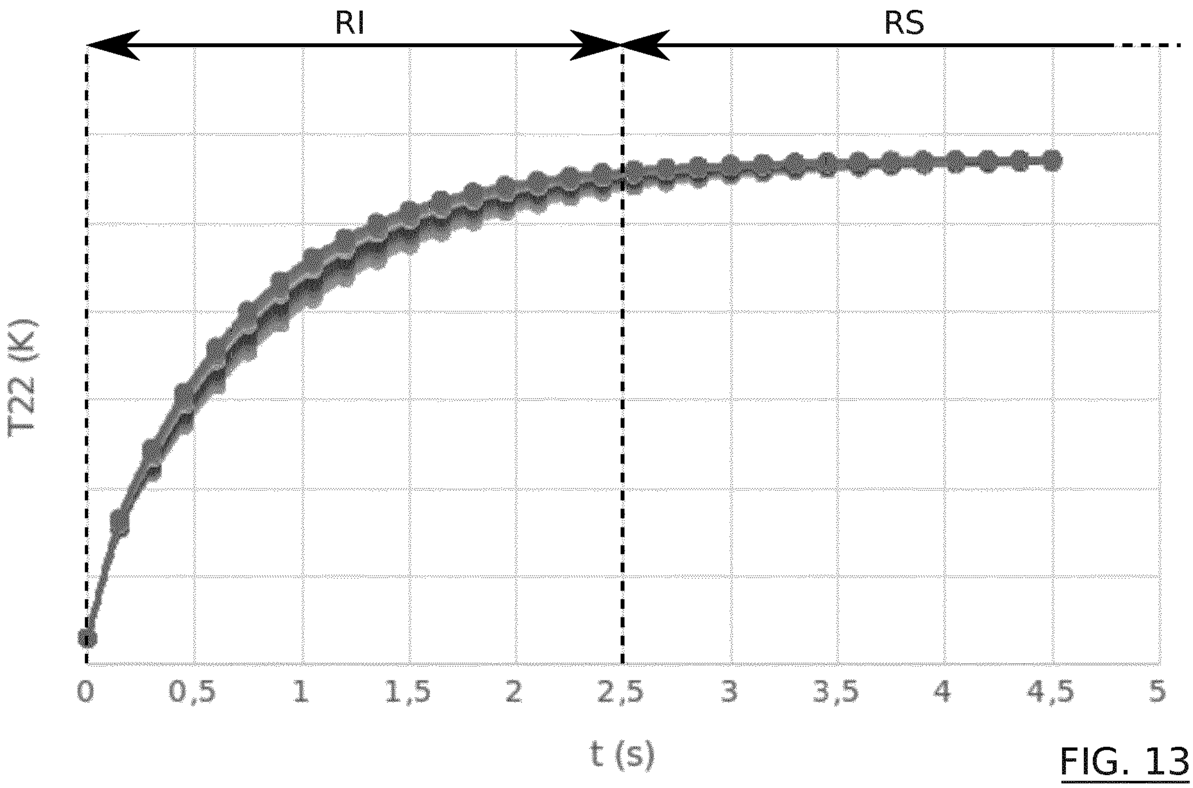


FIG. 13

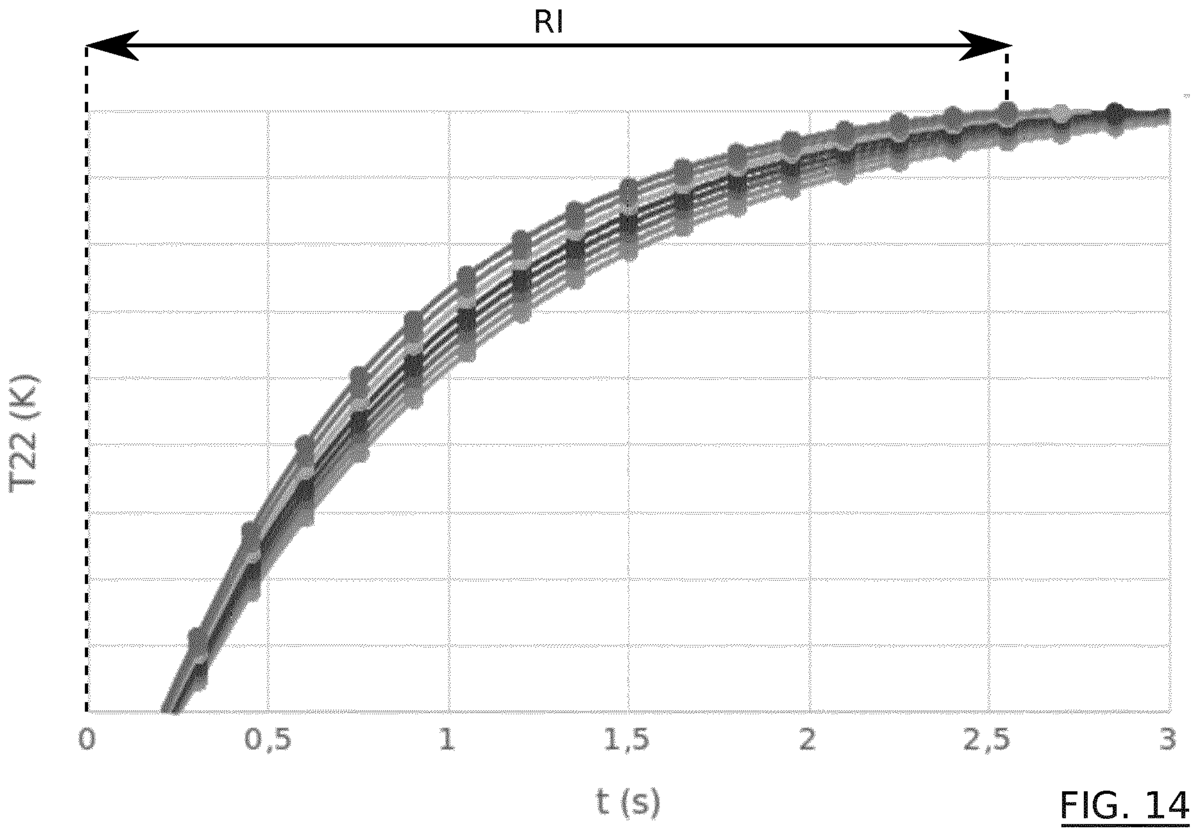


FIG. 14

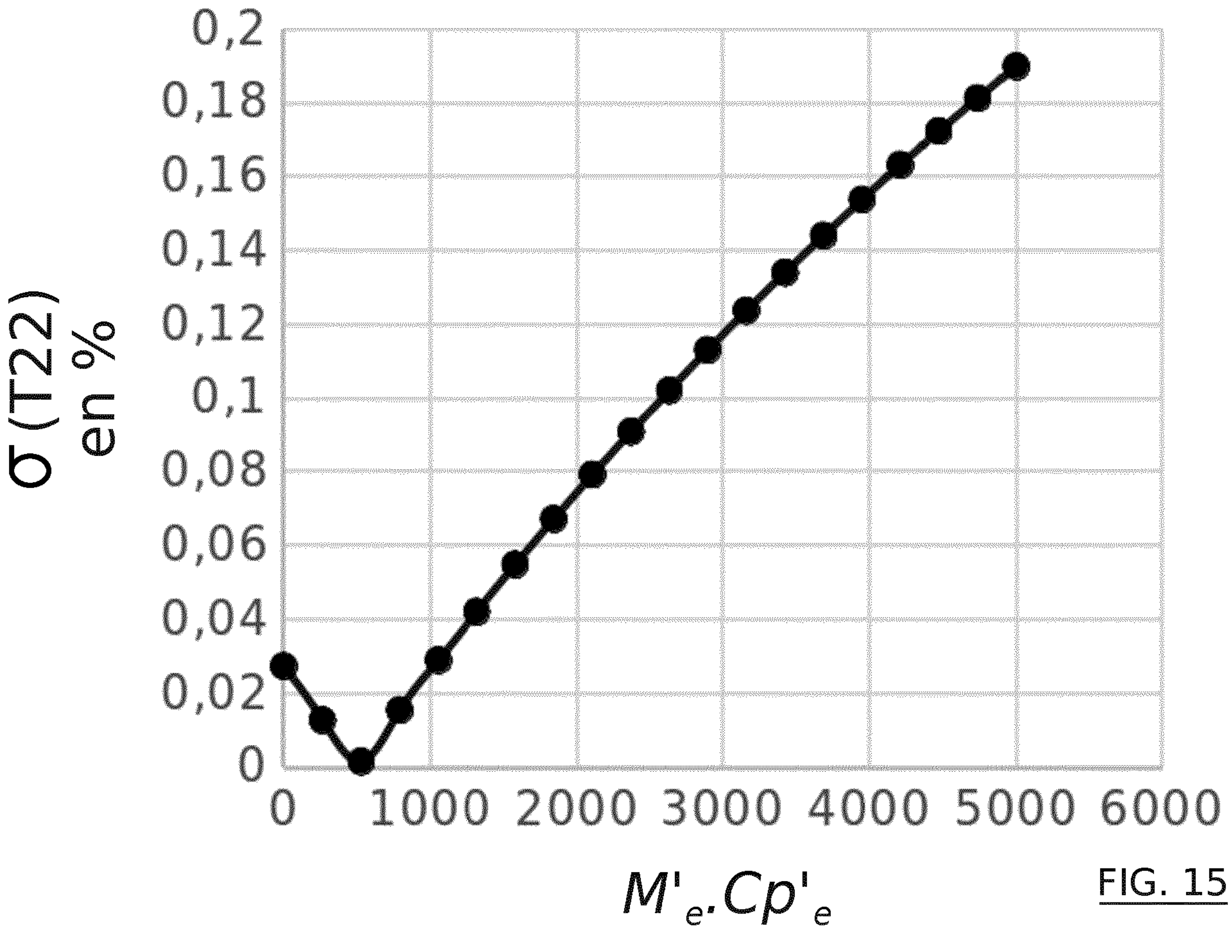

σ (T22) en %
0,2
0,18
0,16
0,14
0,12
0,1
0,08
0,06
0,04
0,02
0
0
1000
2000
3000
4000
5000
6000
M'e.Cp'e


FIG. 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0194876 A1
- WO 2007099240 A1
- WO 2009153323 A1
- US 2005217841 A1